# EUROPEAN PATENT SPECIFICATION

(11) **EP 2 887 586 B1**
(45) Date of publication and mention of the grant of the patent: **01.04.2020**
(21) Application number: 14156261.1
(22) Date of filing: 21.02.2014
(51) Int. Cl.: H04L 12/28, H04L 12/709, H04W 88/04

(54) **A SYSTEM AND A METHOD FOR BONDING CONNECTIONS OF AN ACCESS DEVICE**
SYSTEM UND VERFAHREN ZUM VERBINDEN VON VERBINDUNGEN MIT EINER ZUGANGSVORRICHTUNG
SYSTÈME ET PROCÉDÉ PERMETTANT DE LIER DES CONNEXIONS D'UN DISPOSITIF D'ACCÈS

(30) Priority: 20.12.2013 EP 13198837
(43) Date of publication of application: 24.06.2015
(73) Proprietor: Deutsche Telekom AG, 53113 Bonn (DE)
(72) Inventor: Kraus, Josef, D-64807 Dieburg (DE); Bayer, Nico, D-61231 Bad-Nauheim (DE); Ruppel, Peter, D-10179 Berlin (DE)
(74) Representative: Vossius & Partner Patentanwälte Rechtsanwälte mbB

(56) References cited:
- WO-A1-2012/142910
- US-A1- 2013 077 501
- US-A1- 2013 242 852
- US-B1- 6 650 871
- LUCA BOCCASSI ET AL: "Binder: A System to Aggregate Multiple Internet Gateways in Community Networks", PROCEEDINGS OF THE 2013 ACM MOBICOM WORKSHOP ON LOWEST COST DENOMINATOR NETWORKING FOR UNIVERSAL ACCESS, LCDNET '13, 30 September 2013 (2013-09-30), page 3, XP055206566, New York, New York, USA DOI: 10.1145/2502880.2502894 ISBN: 978-1-45-032365-9

## Description

This invention relates to a system and method for bonding connections to the Internet and/or a wide area network, an access device, preferably configured for use in such a system, a bonding server, preferably configured for use in such a system and a range extender, preferably configured for use in such a system. The invention specifically relates to methods and apparatus for service provider performed Consumer DSL Bonding with regard to service discovery, automatic set-up, topology selection and operation.

Economic, social and leisure activities are more and more transferred to the internet and high speed broadband Internet access has become an important prerequisite to be part of the modern society. In most European countries DSL and its derivatives generally referred to as xDSL like ADSL or VDSL delivers connectivity on the last mile for the majority or a large part of households.

The data rates achievable by DSL depend on the length of the copper line between the residential gateway and the street cabinet or the central office. Very often the users are disappointed if they only get a data rate of a few Mbit/s. One approach to solve the situation is bonding of multiple DSL-lines.

Such solutions are available in particular for business customers [1]. Typically the data are distributed to several DSL-links by a gateway or similar device at the user side and encryptedly transferred by use of virtual private networks (VPN) to an entity in the network or at a remote location. There, the data are assembled to the original stream. In the opposite direction the method operates accordingly. Both, packet based and/or flow-session based traffic distribution algorithm, are known. Flow or session-based traffic distribution algorithm are only effective if several sessions or flows simultaneously request network capacity. This can already be the case during common Internet browsing when several flows between the server and the user end device are set up e.g. to download different parts of a web-site, such as pictures, videos or the like. But the throughput demands of the simultaneously existing flows are very different. Often during file download or streaming only one flow requests high capacity. Therefore a packet based distribution algorithm is expected to be generally more powerful and more universally applicable. New protocols like Multipath TCP [2] enable improved packet based distribution algorithm and there are already systems with Multipath TCP (MPTCP) proxies described [3].

For the approach of the bonding of multiple DSL-lines for the private consumer several limitations have to be overcome [4]. Often residential consumer cannot get more than one DSL copper pair, since the number of twin wires is limited e.g. between the home and the street cabinet or central office or between the delivery point in an apartment house and the apartments. Furthermore sometimes all DSL ports in the street cabinet or central office can be occupied or reserved. Moreover, installing several DSL-Line connections in one consumer household is expensive for both, the network operator and the consumer and it can be expected that their capacity utilization is low. In addition, up to now, there is no entity in the operator network to support a more generally applicable IP packet based and/or flow-session based distribution algorithms for DSL bonding. If a Multipath TCP Proxy functionality is only implemented in a home or DSL gateway the throughput gain can only be achieved if the terminal device at the remote end or the application server also operates MPTCP. Bonding of the DSL connections of two neighboring consumers or a community of several consumers in the neighborhood is lending itself [5]. However, it would be desirable to have a neutral contractual relationship which regulates the usage of bond DSL connections and enables a reliable bond DSL connection for participating neighbors instead of solely relying on the unregulated goodwill of the participants. The necessary links between the consumer's/participants DSL modems or home gateways can be realized by wired or preferable wireless connections, e.g. based on local area networks like Powerline Communication or WLAN based on IEEE802.11 and Wi-Fi radio technology.

US 2013/0242852 A1 discloses a portable, battery-powered, wireless WiFi signal repeater, placed in very close proximity to a WiFi-enabled device and capable of improving a communication link between the device and base station.

The publication of Luca Boccassi et al. "Binder: A System to Aggregate Multiple Internet Gateways in Community Networks", PROCEEDINGS OF THE 2013 ACM MOBICOM WORKSHOP ON LOWEST COST DENOMINATOR NETWORKING FOR D2 UNIVERSAL ACCESS, LCDNET '13, 30 September 2013 (2013-09-30), page 3, XP055206566, New York, New York, USA describes a system termed Binder that seamlessly aggregates multiple geographically distributed internet gateways in community networks.

WO 2012/142910 A1 discloses a method and a system for implementing an elastic network interface and interconnection.

It is an object of the present invention to provide a system for bonding connections to the Internet and/or a wide area network, an access device, a bonding server and a range extender each for bonding connections to the Internet and/or a wide area network and a receptive method for bonding connections to the Internet and/or a wide area network. The object is solved with the features of the independent claims. The dependent claims refer to other aspects of the present invention which can be used together with the features of the independent claims and any foregoing dependent claim but which also represent independent solutions which can be used independent of the subject-matter of any other independent or dependent claim.

The invention relates to a system for bonding connections to the internet and/or a wide area network comprising: at least a first and a second access device; and at least one bonding server, wherein the first access device is configured to provide a first connection between the first access device and at least one of the internet and the wide area network, wherein the second access device is configured to provide a second connection between the second access device and at least one of the internet and the wide area network, wherein the first and the second access device is configured to be connected to each other via a peer-connection, preferably a wireless peer-connection, wherein the at least one bonding server is provided between the at least first and second access device and the at least one of the internet and the wide area network, wherein
(a) uplink data is to be transferred from the first access device to the at least one bonding server, wherein the at least one bonding server and/or the first access device is/are configured to transfer one part of the uplink data from the first access device to the at least one bonding server and is/are configured to transfer the other part of the uplink data from the first access device via the peer-connection to the second access device and further to the at least one bonding server, and wherein the at least one bonding server and/or the first access device is/are further configured to set up first uplink amounts of the one part of the uplink data and the other part of the uplink data; and/or (b) downlink data is to be transferred from the at least one bonding server to the first access device, wherein the at least one bonding server and/or the first access device is/are configured to transfer one part of the downlink data from the at least one bonding server to the first access device and is/are configured to transfer the other part of the downlink data from the at least one bonding server to the second access device and via the peer-connection to the first access device, and wherein the at least one bonding server and/or the first access device is/are further configured to set up first downlink amounts of the one part of the downlink data and the other part of the downlink data.

A connection to the Internet and/or at least a wide area network can be a DSL connection, as for example xDSL like ADSL or VDSL. However, the connection is not limited to DSL but can also be any other broadband connection, in particular power-line-internet, cable internet access, Wi-Fi-to-the-home or the like. In the following, the notion DSL is used as a representative of a fixed wired access technology, whereby each customer is connected by at least one separate wire in a star topology to a street cabinet or central office. However, it is understood by the person skilled in the art that DSL can then be exchanged or partly exchanged by every other fixed wired access technology. In addition, also non-fixed wired access technologies as 3G or 4G or the like can be used.

The transfer or rather the corresponding split of the data over the bonding connections can be session based/flow based and/or IP packet based. Both can be supported and simultaneously operated in an optimized way. An access device can be for example an integrated access device (IAD). An integrated access device can be for example a DSL modem, a home gateway and/or residential gateway. The access device is generally provided by the network operator.

The first connection between the first access device and at least one of the Internet and the wide area network and/or the second connection between the second access device and at least one of the Internet and the wide area network can be the aforementioned DSL connection or the like. In other words, the first and the second access device can be connected each by one DSL connection or the like to the operator network, e.g. the Internet and/or a wide area network.

The peer-connection between two integrated access devices, e.g. consumer DSL modems or home gateways can be a fixed wire peer-connection or preferably a wireless peer-connection. The wired peer-connection can be based on local area networks for example powerline communication. The wireless peer-connection can be based on WLAN/IEEE802.11 and/or Wi-Fi radio technology.

The at least one bonding server can be the correspondent of the first and the second access device in the operator network, and can be configured to operate the bonding process, e.g. the session/flow and/or packet based splitting or combining of consumer traffic, at the operator side and is also configured to control the total bonding system. The bonding system/bonding service can be performed and operated by a bonding service provider which typically can be the fixed or integrated network operator or the operator of a semi-public Wi-Fi access service.

According to an embodiment of the invention, the first access device and/or the second access device is/are configured to set up second uplink amounts of the one part of the uplink data and the other part of the uplink data, wherein the second uplink amount of the one part of the uplink data is preferably greater than the respective first uplink amount, and the second uplink amount of the other part of the uplink data is preferably smaller than the respective first uplink amount.

For example, the second access device can limit the amount of the other part of the uplink data, i.e. the part of the uplink data which is transferred from the first access device via the peer-connection to the second access device and further to the at least one bonding server, in case that uplink data is to be transferred from the first access device to at least one bonding server. Also the first access device can be configured to limit the uplink data from the first access device to be transferred to the at least one bonding server directly and/or from the first access device via the peer-connection to the second access device and further to the at least one bonding server, in case that the uplink data is to be transferred from the first access device to the at least one bonding server.

According to another embodiment of the invention, the first access device and/or the second access device is/are configured to set up second downlink amounts of the one part of the downlink data and the other part of the downlink data, wherein the second downlink amount of the one part of the downlink data is preferably greater than the respective first downlink amount, and the second downlink amount of the other part of the downlink data is preferably smaller than the respective downlink amount.

For example, also in case of downlink data, both the first and/or the second access device can be configured to limit the data which is directly transferred from the at least one bonding server to the first access device and/or which is transferred from the at least one bonding server to the second access device and then be transferred via the peer-connection to the first access device.

According to another embodiment of the invention, the first access device is connected to at least one of a first home network and a first local area network, and/or the second access device is connected to at least one of a second home network and a second local area network.

The first access device can be configured to establish a first home network and/or a first local area network and the second access device can also be configured to establish a second home network and/or a second local area network. Users of the first home network and/or a first local area network can then send data and/or receive data via the bonding connections.

According to another embodiment of the invention, the system further comprises at least one further selected access device selected from a plurality of access devices, wherein each further selected access device is configured to provide a respective connection between said further selected access device and at least one of the internet and the wide area network, and wherein each further selected access device is configured to be connected to at least another access device via a peer-connection.

The bonding of the connections is not restricted to two connections but a plurality of connections according to the number of selected access devices can be used for bonding connections. With that, several bonding topologies can be constructed and they can be illustrated like chemical modules. Very analogue to chemistry, a weaker or a tight coupling to other access devices in a system can be defined. Depending on the number of access devices which are participating in the system, the generated system comprises bonding connections of pairs or groups.

According to another embodiment of the invention, each further selected access device is configured to transfer uplink data from another access device to the at least one bonding server and/or each further selected access device is configured to transfer downlink data from the at least one bonding server to another access device.

According to another embodiment of the invention, each further selected access device is connected to at least one of a respective home network and a respective local area network.

According to another embodiment of the invention, the at least one bonding server is configured to perform the selection of the access devices and wherein the selected access devices are configured to build at least a pair or at least a small group for bonding in a plurality of access devices wherein the bonding server is configured to reorganize existing pairs or small groups if further access devices have to be selected.

According to another embodiment of the invention, the at least one bonding server and/or the at least one further selected access device is/are configured to transfer one further part of the uplink data from the at least one further selected access device to the at least one bonding server.

According to another embodiment of the invention, the at least one bonding server and/or the first, the second and/or the at least one further selected access device is/are configured to set up the respective uplink amounts of the one part of the uplink data, the other part of the uplink data and the further part of the uplink data.

According to another embodiment of the invention, the at least one bonding server and/or the at least one further selected access device is/are configured to transfer one further part of the downlink data from the at least one bonding server to the at least one further selected access device.

According to another embodiment of the invention, the at least one bonding server and/or the first, the second and/or the at least one further selected access device is/are configured to set up the respective downlink amounts of the one part of the downlink data, the other part of the downlink data and the further part of the downlink data.

According to another embodiment of the invention, at least one of the access devices of the system comprises secondary public wireless means, and the peer-connection between the at least one access device comprises the secondary public wireless means, and at least one other access device of the system is performed by using the secondary public wireless means.

Secondary public wireless means can be features and are components of already existing WLAN/Wi-Fi access sharing services and systems providing secondary public access for semi-public-private hotspot communities. Exemplary, commercial services are FON [6] and/or WLAN TO GO [7]. Accordingly, the secondary public wireless means can comprise separate physical MAC entities (radio frequency modules) or virtual MAC entities (e.g. separate by different SSIDs) over one physical entity, e.g. one radio frequency module. According to another embodiment of the invention, at least one of the access devices of the system is configured to send or request information to or from other access devices of the system and/or the at least one bonding server wherein the information comprises at least one of the following properties of the at least one of the access devices: existence, model, firmware, unique identifier, general availability for bonding connections, current availability for bonding connections, current traffic, average traffic, overall traffic, capacity available for bonding connections, time of high traffic, time of low traffic, and time-traffic relation.

The sending and/or requesting information to or from other devices of the system and/or the at least one bonding server can be used to support service discovery of the bonding service/system. A service discovery function/means, preferably using a wireless network, is configured to scan for appropriate devices in the neighborhood, scan for availability of the bonding service and all necessary performance of the involved networks. The services discovery is also configured to automatically contract a continuous liaison preferably to achieve fair and mutual benefits and high security. Generally, the service discovery function for the bonding system/service is configured to verify and test the preconditions to set up and operate the bonding service. The service discovery function/means can be configured to select the bonding topologies and corresponding topology granularities, like pairs, small groups or the like. Within and after the service discovery functions/means, the bonding system/service can be configured to control the security processes during set-up and operation using both DSL and wireless links.

The service discovery can be configured to use the wireless infrastructure which in case of successful service discovery can set up the wireless connections for bonding. For example, if the implemented wireless infrastructure is based on IEEE802.11 and Wi-Fi, the service discovery function can operate in pre-association mode for all or the first activities of service discovery. For example, the service discovery function can be built upon the Generic Advertising Service (GAS); ([8], Chapter 4.11 and related chapters) and the Access Network Query Protocol ([8], Chapter 8.4.4 and related chapters). The Generic Advertising Service is over-the-air transportation service that is configured to provide over-the-air transportation of frames of higher layer advertisements. The Access Network Query Protocol is a query protocol configured for access network information retrieval. For the bonding service vendor specific access network query protocol elements and an optionally additional advertisement protocol for network and service discovery can be defined. Furthermore, a listen channel or a special channel can be defined by the bonding service provider to accelerate the service discovery process. In case of LTE, LTE direct and LTE proximity services a connectionless discovery can be used [10].

In addition, the service discovery function, in particular of a bonding requesting access device can be configured to scan and verify at least one of the following: the principal availability of one or more access devices in the neighborhood offering a bonding service of a bonding service provider; the name or identity of the bonding service provider, in particular if there are several bonding service providers or if there are cooperation agreements between bonding service providers and/or network operators and/or operators of semi-public Wi-Fi access. Moreover, the service discovery function of a bonding requesting IAD can also be configured to scan and verify at least one of the following: the current readiness of the at least one discovered access device to perform the requested service; the possible bonding topologies or existing instants of the bonding topology the at least one discovered access device is already bounded to. Moreover, with this service discovery function/means also the number of members in this instance can be detected. The service discovery function/means can also be configured to scan and verify at least one of the following: the feasibility to built pair or groups in the bonding network; the number of members in already existing groups; a first performance estimation of the wireless link to the at least one discovered access device as well as the connection performance or DSL performance of the at least one discovered access device.

The service discovery is also configured to select one or more access devices as potential candidates and is also configured to identify the corresponding bonding service provider and is configured to request the one or more access devices to provide a temporary valid identifier to simplify possible next set-up steps which can then involve the bonding service provider.

According to another embodiment of the invention, at least one of the access devices of the system comprises means for establishing a mobile ad-hoc network, wherein at least one other access device of the system is configured to connect to said mobile ad-hoc network, and wherein the peer-connection between the at least one access device comprising means for establishing a mobile ad-hoc network and the at least one other access device being configured to connect to said mobile ad-hoc network is performed by said mobile ad-hoc network.

A mobile ad-hoc network is a self-configuring infrastructureless network of devices connected by wireless means of a mobile network. The means for establishing a mobile ad-hoc network can be based on mobile telephone and/or mobile broadband communication standards as UTMS or LTE or the like. Advantages to use direct links based on a mobile network are among others: longer range; control of the direct link by the base station and therefore easier control of wireless link for bonding by the bonding server functionality; easy conversion of the direct link into a link to the macro base station, e.g. in case of outage, interruption or shutdown of the bonding donor functionality of at least one access device or insufficient performance of the (DSL-) bonding. A fixed-wire bonding scenario can migrate to a hybrid access scenario, whereby a fixed-wire path (DSL-path) and a path over the mobile network are bonded. For example, the following priorities for data transport and traffic split are proposed: use of own broadband connection (DSL connection) to its full capacity, use free capacity of the bonded broadband link (DSL link) of the neighbour, or use the mobile link to the macro base station

For example, if Wi-Fi is used for a wireless bonding link between at least two access devices, an additional connectivity to an existing mobile network can be introduced as a third link for bonding. This third link may only be active for peak situations and can unload hybrid access scenarios without completely resign it. With this, the own wideband connection can be used to its whole capacity, the free capacity of the connected wideband link of the neighbor can be used and the mobile link to the macro base station can be used as well.

According to another embodiment of the invention, the system further comprises a mobile base station being configured to at least partially transfer uplink data from at least one of the access devices of the system to the at least one bonding server and/or being configured to at least partially transfer downlink data from the at least one bonding server to at least one of the access devices of the system.

According to another embodiment of the invention, at least one of the access devices of the system is configured to transfer uplink data from at least one of the access devices to the at least one bonding server via the mobile base station and/or is configured to at least partially transfer downlink data from the at least one bonding server to at least one of the access devices of the system via the mobile base station.

The invention also relates to an access device for bonding connections to the internet and/or a wide area network, preferably configured for use in at least one of the aforementioned systems, comprising: means for providing a connection between the access device and at least one of the internet and the wide area network, means for connecting to one other access device via a peer-connection, preferably a wireless peer-connection, means for transferring one part of uplink data from the access device to the at least one bonding server and means for transferring the other part of the uplink data from the access device via the one other access device to the at least one bonding server.

According to an embodiment of the invention, the access device further comprises: means for transferring one part of downlink data from the at least one bonding server to the first access device and means for transferring the other part of the downlink data from the at least one bonding server via another access device to the access device.

According to another embodiment of the invention, the access device further comprises: means for receiving first uplink amounts of the one part of uplink data and the other part of the uplink data.

According to another embodiment of the invention, the access device further comprises: means for setting up second uplink amounts of the one part of the uplink data and the other part of the uplink data, wherein the second uplink amount of the one part of the uplink data is preferably greater than a/the respective first uplink amount and wherein the second uplink amount of the other part of the uplink data is preferably smaller than a/the respective first uplink amount.

According to another embodiment of the invention, the access device further comprises: means for receiving first downlink amounts of the one part of downlink data and the other part of the downlink data.

According to another embodiment of the invention, the access device further comprises: means for setting up second downlink amounts of the one part of the downlink data and the other part of the downlink data, wherein the second downlink amount of the one part of the downlink data is preferably greater than a/the respective first downlink amount and wherein the second downlink amount of the other part of the downlink data is preferably smaller than a/the respective first downlink amount.

According to another embodiment of the invention, the access device further comprises: means for transferring uplink data from another access device to the at least one bonding server via the peer-connection.

According to another embodiment of the invention, the access device further comprises: means for transferring downlink data from the at least one bonding server to the one other access device via the peer-connection.

According to another embodiment of the invention, the access device is configured to be connected to at least one of a home network and a local area network.

According to another embodiment of the invention, the access device further comprises: secondary public wireless means, wherein the secondary public wireless means are configured to perform the peer-connection between the access device and at least one other access device.

According to another embodiment of the invention, the access device further comprises: means for sending or requesting information to or from other access devices of the system and/or the at least one bonding server wherein the information comprises at least one of the following properties of the at least one of the access devices: existence, model, firmware, unique identifier, general availability for bonding connections, current availability for bonding connections, current traffic, average traffic, overall traffic, capacity available for bonding connections, time of high traffic, time of low traffic, and time-traffic relation.

The invention also relates to a bonding server for bonding connections to the internet and/or a wide area network, preferably configured for use in at least one of the aformentioned systems, comprising:
(a) means for transferring one part of the uplink data from a first access device to the bonding server; means for transferring the other part of the uplink data from the first access device via a peer-connection to a second access device and further to the bonding server, and means for setting up first uplink amounts of the one part of the uplink data and the other part of the uplink data;
   and/or
(b) means for transferring one part of the downlink data from the bonding server to the first access device; means for transferring the other part of the downlink data from the bonding server to the second access device and via the peer-connection to the first access device, and means for setting up first downlink amounts of the one part of the downlink data and the other part of the downlink data.

According to an embodiment of the invention, the bonding server is configured to be provided between at last one access device and at least one of the internet and the wide area network.

According to another embodiment of the invention, the bonding server further comprises means for selecting at least one access device from a plurality of access devices.

According to another embodiment of the invention, the bonding server further comprises means for transferring one further part of the uplink data from the at least one further access device to the bonding server.

According to another embodiment of the invention, the bonding server further comprises means for setting up the uplink amounts of the one part of the uplink data, the other part of the uplink data and the further part of the uplink data.

According to another embodiment of the invention, the bonding server further comprises means for transferring one further part of the downlink data from the bonding server to the at least one further selected access device.

According to another embodiment of the invention, the bonding server further comprises means for setting up the downlink amounts of the one part of the downlink data, the other part of the downlink data and the further part of the downlink data.

The invention also relates to a range extender for bonding connections to the internet and/or a wide area network, preferably configured for use in at least one of the aforementioned systems, comprising means for extending a peer-connection between at least two of the aforementioned access devices.

The range extender can comprise several separate physical MAC entities (radio frequency modules) or virtual MAC entities to implement wireless links for bonding. The arrange extender can comprise a module for mobile connectivity, e.g. an LTE and/or UMTS module. The range extender can be used to extend the wireless range for bonding. The range extender can also increase the throughput by enabling higher modulation schemes of the wireless link. The range extender can also act as a gateway, for example, if WLAN home networks with different radio channels are used for bonding. The range extender can also support service discovery of the bonding system/service, for example over the extended range or across its gateway functionality. The range extender can also comprise several functionalities of the bonding system service in order to unload the at least one access device.

The range extender can also comprise mobile connectivity means, as for example an LTE and/or UMTS module. Said means can provide a further link to the bonding server for additional bonding or as a second bonding means in case of outage, interruption or shutdown of the one of the access devices or of the bonding donor functionality in an access device or IAD. The range extender can also comprise autonomous connectivity to the bonding server by mobile network thus taken over further essential functionalities during setup and operation.

According to an embodiment of the invention, the range extender further comprises: means for transferring uplink data from an access device to at least one the bonding server and/or means for transferring downlink data from the at least one bonding server to the access device.

According to another embodiment of the invention, the means for transferring uplink data from an access device to at least one the bonding server and/or the means for transferring downlink data from the at least one bonding server to the access device are configured to transfer said data wirelessly.

According to an embodiment of the invention, the range extender further comprises: means for evaluating information send by an access device, the information comprising at least one of the following properties of the at least one of the access devices: existence, model, firmware, unique identifier, general availability for bonding connections, current availability for bonding connections, current traffic, average traffic, overall traffic, capacity available for bonding connections, time of high traffic, time of low traffic, and time-traffic relation.

The invention also relates to a method comprising method steps to be performed on at least one of the aforementioned apparatus.

The described aspects of the invention relate to concepts and methods which enable the automatic set-up and operation of DSL packet and flow based bonding of neighbouring consumers or consumer communities with no or nearly no user interaction and with no verbal negotiations among neighbouring persons. Thereby a service provider can control and operate the whole service during all process steps. The necessary links between the consumers DSL modems or home gateways are realized by wired or preferably wireless connections e.g. based on local area networks like Powerline Communication or Wi-Fi.

With the present invention nearly all processes can be unnoticeable performed for the consumer. Further, a bonding service provider can operate and/or control the system and processes delivering high quality in security and maintenance. The invention can also comprise at least one of the following: automated methods for power save, wakeup, troubleshooting which can be installed; automated reorganization, splitting or merging of groups; automated system adaption to LAN and WAN link qualities and forecast of corresponding parameters; automated assignment of session/flow based bonding and IP packet based bonding; resource management and policy management based on network qualities and for different user groups, e.g. priority of the DSL access owner, service limits for bonding, basic rate in case of outage of the DSL connection of the owner.

The bonding system can include a bonding server functionality which is located in the operator network or the Internet whereby the instances performing this functionality can be at different locations in the network. They can already be in the street cabinets or at aggregation nodes or in the core network. This can prevent from unnecessary long data transport paths to be bonded. Long data transport paths, e.g. end to end, can generate additional parameter differences or jitter, e.g. throughput, delay, error rate or the like, caused by network nodes and links which are not the fundamental links the traffic is split to. Due to the inherent features of TCP, which is the dominating transport protocol of the Internet, parameter differences or parameter jitter can reduce the bonding efficiency and therefore should be avoided as much as possible.

The IADs can be partly virtualized which means that some functions of the IADs especially the control functions are operated in a computer center. Thereby the virtualized parts of the IADs can be performed on the same hardware as the bonding server or can be combined with the bonding server functions to simplify the overall control of the bonding system.

If three or more access devices (IADs) are part of a bonding relationship a bonding table can be used as another regulative for traffic control and distribution. This table is stored at each access device (IAD) and correspondingly for each access device (IAD) at the bonding server and lists the neighboured access devices (IADs) the traffic can be sent to. In this table a ranked or percentage assessed priority, e.g. the estimated capacity to transport bonding traffic, is stored for the listed access devices (IADs). The table can be adapted dynamically to the current or forecasted bonding possibilities. Such a bonding table may be alternatively or additionally be used to pair or group formation.

The service build-up and the liaison contract can comprise set-up steps wherein the broadband/DSL connectivity can be used especially to address security aspects. The requesting access device can send the identifier(s) of the discovered access device(s) to the bonding service provider and can apply for the service. The bonding service provider can perform and/or verify at least one of the following: free capacity at the bonding server or bonding server functionality; assignment of suited bonding server; meet of necessary security features; recommendation or decision for wireless link set-up in particular one of the following: Radio band, channel, WLAN/Wi-Fi mode e.g. Wi-Fi Direct, ad-hoc mode, wireless mesh like mode, infrastructure mode, the role the WLAN/Wi-Fi MAC entity used for bonding in the wireless network e.g. access point, non-access-point client device, group owner or group client in Wi-Fi Direct; exchange of WLAN credentials or passkeys, possibility to transfer on DSL for raising the security level; decision on used topology and/or bonding variants; acceptance of service request; considering a continuous liaison with one or more access devices and/or potentially contracting it automatically, shared capacity between the DSL lines, traffic prioritization and service limitations to fixed time periods or minimal capacity in case of outage of DSL lines; announcement of the beginning of the service to the involved IADs and request them to set-up the wireless links for bonding; tasking the IADs with performance and delay measurements and transfer of the measured values.

In addition, during operation both the wireless links and DSL links can be applied. The devices or functions involved in the bonding service, in particular the access device(s) and the bonding server(s), are configured to perform at least one of the following, preferably in a common effort: control of the splitting process, switching on or off of session/flow based splitting or packet based splitting; control and operation of power-save and wake-up methods; trouble shooting; dynamic adaption and optimization of service or liaison parameters e.g. to network load or forecasted usage patterns of the consumer; reorganization, merging or splitting of existing topology instances or groups, taking out of inefficient bonding links or relations; updating of a bonding table if implemented; traffic shaping and traffic flow control.
The necessary modification of the dynamic adaptable control parameters and corresponding functions can be performed decentralized at the IADs and/or centralized at the bonding server. Thereby self-learning methods e. g. known from games theory can be used.

If a permanent or temporary shut-down of the service for a single user occurs, in a defined geographical area or of the whole service, is necessary, the invention provides processes operated in the bonding server and at the involved access devices to reconstruct an advantageous new status or a status from the past for the remaining users of the service. Access devices for which the service must be stopped can be operated in legacy DSL mode without bonding service. Service discovery for the bonding service can be activated by the bonding service provider again if it seems to be beneficiary with good prospects.

The invention also relates to methods and/or devices which are configured to perform at least one of the following:
- Overall control of the splitting process
- Adaption of the bonding system to the wireless and WAN (DSL) link qualities
- Resource management for different user groups:
   ∘ DSL access owners which are bonding beneficiaries
   ∘ DSL access owner which are bonding donors
   ∘ Users of secondary public access (these are users outside the bonding community, e.g. FON users)
- Appliance of different policies to different user groups (e.g. traffic prioritization, traffic distribution, pre-allocation of resources)
- Adaption of the policies to the link qualities and available data transfer capacities
- Adaption of the bonding system to user behavior and traffic demand
- Overall control for best user experience: Related to one user the bonding system should achieve a throughput rate which is higher or equal as the rate of the own DSL link. If this is not the case the user should be automatically be removed from the bonding community and his traffic should be completely prioritized on his own DSL link.
- User awareness and configuration by the user: The described methods shall enable a completely hidden operation of the bonding service without notice of any negative effect by a single user. Optionally the user should be enabled to configure the service on an appropriate user interface (e.g. the user should be able to define maximum shared capacity, time periods for sharing).

### BRIEF DESCRIPTION OF THE DRAWINGS

Fig. 1 shows a schematic diagram of a basic model and components for operating a service provider performed, session/flow and packet-based DSL bonding according to an aspect of the present invention,
Fig. 2a) shows a schematic diagram of a first example of a simple and primary bonding topology according to an aspect of the invention,
Fig. 2b) shows a schematic diagram of a second example of a simple and primary bonding topology according to an aspect of the invention,
Fig. 2c) shows a schematic diagram of a third example of a simple and primary bonding topology according to an aspect of the invention,
Fig. 3 shows a schematic diagram of a general topology for DSL bonding according to an aspect of the invention,
Fig. 4 shows a schematic diagram of a first embodiment of a system according to the invention using a topology similar to the first example shown in Fig. 2a,
Fig. 5 shows a schematic diagram of a second embodiment of a system according to the invention based on the first embodiment shown in Fig. 4,
Fig. 6 shows a schematic diagram of a third embodiment of a system according to the invention using a topology similar to the second example shown in Fig. 2b,
Fig. 7 shows a schematic diagram of a fourth embodiment of a system according to the invention based on the third embodiment shown in Fig. 6,
Fig. 8 shows a schematic diagram of a fifth embodiment of a system according to the invention based on the fourth embodiment in Fig. 7,
Fig. 9 shows a schematic diagram of a sixth embodiment of a system according to the invention based on the third embodiment shown in Fig. 6, and
Fig. 10 shows a schematic diagram of a further embodiment of a system according the invention.

### DETAILED DESCRIPTION OF THE INVENTION

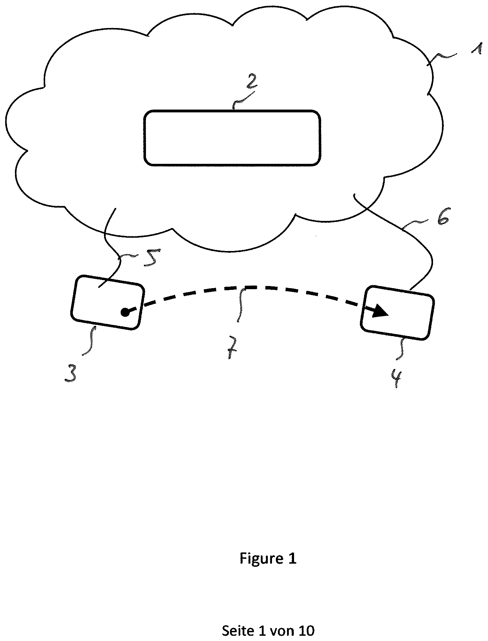

A schematic diagram of an example of an underlying basic model for service provider performed consumer DSL bonding is illustrated in Fig. 1. Fig. 1 shows an operator network 1 which as an alternative may be the Internet. Within the operator network, a bonding server 2 is schematically shown. Fig. 1 further shows a first access device 3 and a second access device 4. The first access device 3 is connected with the operator network 1 and the bonding server 2, respectively via a first connection in this case via a first DSL connection 5. The second access device is connected with the operator network 1 and the bonding server 2, respectively via a second connection, in this case a second DSL connection 6. The first access device 3 and the second access device 4 are connected to each other via a peer-connection 7, in the present case a bidirectional wireless link. In this example, the bidirectional wireless link is shown as a dashed line wherein the arrow points from the first access device 3 to the second access device 4.

In this example and generally as described herein, the first and second access device can be realized as an integrated access device (IAD) which can be a DSL modem, a home gateway or a residential gateway.

The model enables both packet and session/flow based bonding whereby the focus lies on high-output packet based bonding. The model comprises as an example, the following components or roles:
▪ Bonding IAD: The first access device 3 operates as bonding IAD, i.e. a bonding client and is the beneficiary or acceptor of the bonding.
▪ Bonding Donor: The second access device 4 operates as a bonding Donor IAD to forward the traffic of the Bonding IAD. In principle an access device or IAD can have both roles, i.e. the role of a Bonding IAD and the role of a Bonding Donor.
▪ DSL Connection: Each access device is connected by one DSL connection to the operator network.
▪ Bonding server: The Bonding server is a correspondent of the Bonding IAD in the operator network. The Bonding server operates the bonding process, in particular, the flow or packet based splitting or combining of user traffic at the operator side and controls the total bonding system on the whole. Under certain conditions the bonding server can also be located in the Internet.
▪ Wireless link: In Fig. 1 the arrow symbolizes a (bidirectional) wireless connection for bonding and points from the Bonding IAD, i.e. the first access device 3, to the Bonding Donor, i.e. the second access device 4. For wireless technologies Wi-Fi based on IEEE 802.11 and Wi-Fi Alliance specifications can be considered.

The bonding service is performed and operated by a bonding service provider, which typically can be the fixed or integrated network operator or the operator of semi-public Wi-Fi access.

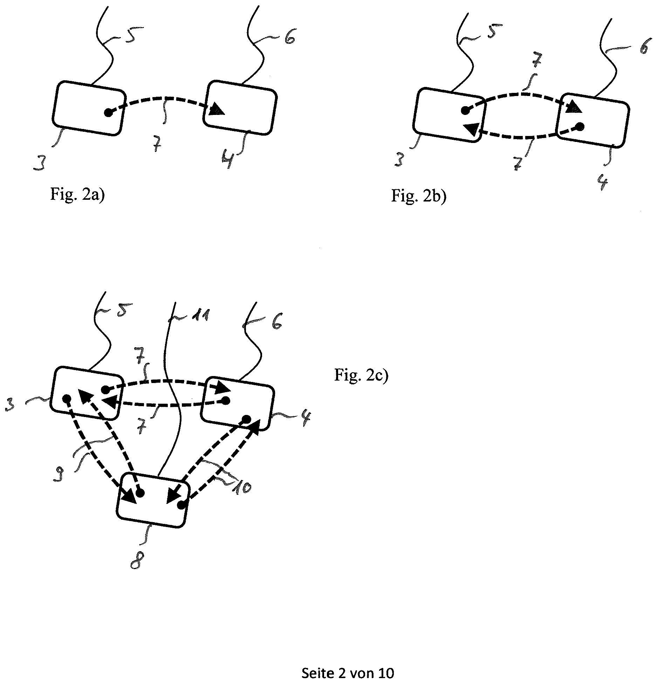

Upon the basic model and components several bonding topologies can be constructed. In Figures 2a), b) and c) simple and primary bonding topologies are shown. They can be illustrated like chemical molecules. The IADs being part of a bonding topology form an instance of a bonding topology. This instance can also be denoted by bonding community. Very analogue to chemistry, a weaker or a tight coupling to other IADs in a bonding community can be defined. Depending on the number of IADs, which contract a tight coupling, the generated liaison can be called Pair or Group.

In Figure 2a) single-usage bonding of two DSL connections 5 and 6 is shown. Only the bonding IAD 3 can benefit from the bonding. The other IAD 4 plays the role of the Bonding Donor. This use case may be effective if the DSL data transfer rates (bit rate) of the two IADs 3 and 4 differ a lot or if only one IAD can play the role of the Bonding Donor due to other reasons e.g. security or service provider affiliation or policies.

In Figure 2b) double-usage bonding of two DSL connections 5, 6 is shown. Each of the two IADs has both roles the Bonding IAD and Bonding Donor. Both IADs 3 and 4 can benefit by improved throughput. This use case may be effective if the DSL bit rates of the two IADs are nearly equal and the bonded households have no permanent power users. The two IADs can automatically contract a continuous liaison to achieve fair and mutual benefits and high security. In this case such a liaison between two IADs can be called Pairing and the two IADs build a Pair.

In Figure 2c) fully multi-usage bonding of three (or more) DSL connections 5, 6, 11 is shown. The first access device 3 is connected via a first peer-connection 7 to the second access device 4. The first access device 3 is further connected to a third access device 8 via a second peer-connection 9. The second access device 4 is also connected to the third access device 8 via a peer-connection 10. Each of the IADs 3, 4, and 8 has both roles as the Bonding IAD and as Bonding Donor and each IAD can benefit by improved throughput. This use case may be highly effective if the DSL bit rates of the IADs are nearly equal. Bonding gain can still be achieved if one or few power users are active. The IADs can automatically contract a continuous liaison to achieve fair and mutual benefits and high security. In this case such a liaison between three or more IADs can be called Grouping and the IADs build a Group.

Long-lasting Pair and Group relationships can simplify and stabilize the operation of the bonding system and reduce adaptation efforts. Isolated Pairs and small Groups enable traffic distribution algorithm of lower complexity. Especially Pairs can be seen as the basic element of a bonding system since they can be set-up easily. Additionally Pairs have the advantage that when a new IAD requests for the bonding service they can be extended to a small group of three IADs which still simply can be handled. Not until several further IADs are requesting for the bonding service at the same location major adaptation in the neighboring bonding community are necessary.

The topology for double- and multi-usage bonding is treated separately since for the wireless links different modes of the used wireless technology can be applied. This can be point-to-point links e.g. based on Wi-Fi Direct [9]. For bonding of three or more devices other wireless network variants e.g. ad-hoc mode, mesh like mode, or infrastructure mode of WLAN or group variants of Wi-Fi Direct can be used.

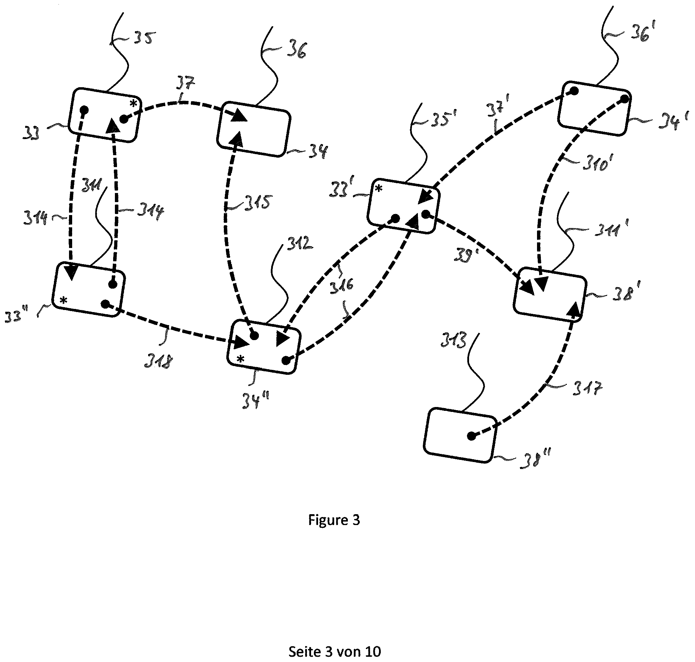

A more general topology is shown in Figure 3. This topology is partly a connected assembly of the simple and primary bonding topologies of Figures 2a), b), and c). More specifically, Figure 3 shows two access devices 33, 34 being connected to the operator's network via connections 35 and 36, respectively. These two access devices are connected via a peer-connection 37. Figure 3 further shows three access devices 33', 34', and 38' each being connected to the operator's network via connections 35', 36' and 311', respectively. These three access devices 33', 34', and 38' are connected to each other via peer-connections 37', 39', and 310'. In the general topology of Figure 3 a further access device 33" is connected to the operator's network via a connection 311 and via a first peer-connection 314 with the access device 33 and via another peer-connection 318 with a further access device 34". This further access device 34" is connected to the operator's network via a connection 312 and via a peer-connection 315 with the access device 34 and via another peer-connection 316 with the access device 33'. Figure 3 shows still a further access device 38" being connected to the operator's network via a connection 313 and via a peer-connection 317 to the access device 38'. IAD 33, 33', 33", 34" are IADs with both roles Bonding IAD and Donor. They are marked with a star. 34' and 38" are Bonding IADs only and 38' has only a Donor role. The DSL connections 36' and 38"have only low DSL bitrate. The connections 36 and 311'have a high bitrate.

This topology may be applied for little bigger communities and addresses different DSL bitrates. The current user requirements or traffic demands and the performance of the different links and networks may change more dynamically and the system may adapt the bonding topologies and used wireless links and other parameters correspondingly. Also this topology can include continuous liaisons (Pairs and Groups) which are probably realized only for some of the IADs of the bonding community.

To implement the wireless home network and the diverse wireless links for bonding, several wireless MAC functionalities per IAD can be integrated e.g. based on separate physical MAC entities (radio frequency modules) or virtual MAC entities (e.g. separated by different SSIDs) over one physical entity (radio frequency module). If a mobile network technology also provides direct links these links can also be used as wireless links for bonding. Currently such direct links are proposed for LTE proximity services [10] and are investigated in 3GPP Release 12 [11].

The above discussion of "Bonding Topologies" with reference to Figures 2a), b), and c) as well as Figure 3 shows that a variety of bonding variants can be realized. In the following for simplification only some variants are described regarding two access devices, lADs only. Some of the variants involve the simultaneous operation of a semi-public Wi-Fi access service for semi-public-private hotspot communities ([6], [7]). However, the present invention can be used in the same way for variants having more than two access devices.

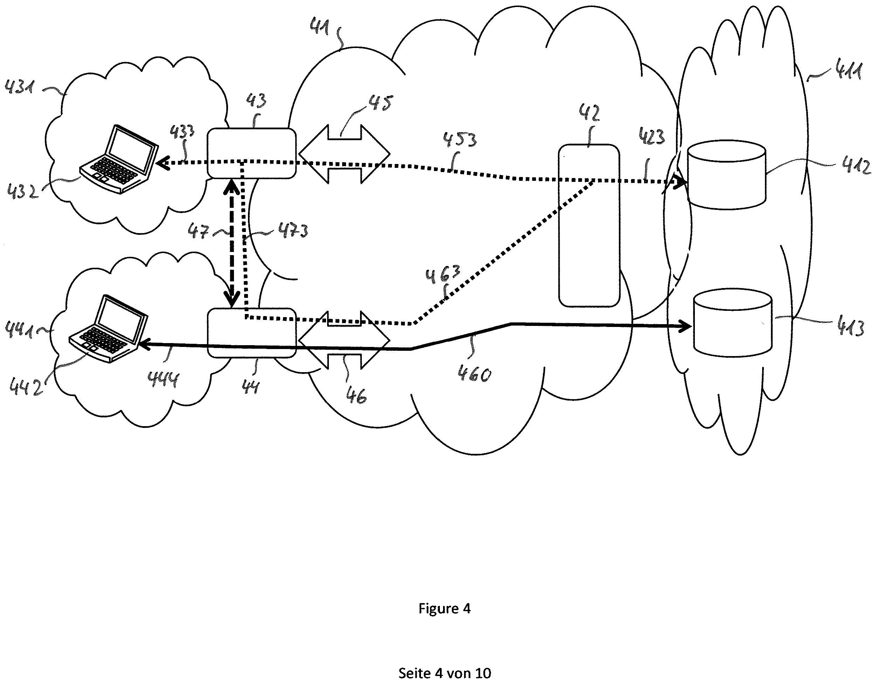

In Figure 4 a schematic diagram of a first embodiment of a system according to the invention is shown. In this first embodiment a topology similar to the first example shown in Figure 2a) is used. Similar to the basic model shown in Figure 1 the system comprises an operator network 41, wherein a bonding server 42 is present. A first access device 43 functioning in this example, as a bonding IAD is connected via a connection 45 with the bonding server 42. A second access device 44 functioning as a Bonding Donor is connected via a connection 46 with the bonding server 42. In this example, the connection 45 is a first DSL connection and the connection 46 is a second DSL connection. Figure 4 further illustrates the Internet 411 wherein a first application server 412 and a second application server 413 are present. These two application servers are only examples for a type of apparatuses, systems or connections to other networks which can be accessed by the first and the second access devices 43 and 44. The first access device 43 is connected or part of a first home network 431 wherein, as an example a computer 432 may be present. Similarly, the second access device 44 is connected to or part of a second home network 441 wherein, as an example a computer 442 is shown. The first access device 43 is connected with the second access device 44 via a peer-connection 47 shown as a dashed line. In this example, the computer 432 within the first home network 431 can be connected to the first application server 412 via the first access device 43, the first DSL connection 45 to the bonding server 42 and via the peer-connection 47, the second access device 44, the DSL-connection 46 to the bonding server 42. The bonding server is connected to the first application server 412. On the other hand the computer 442 in the second home network 441 can be connected via the second access device 44 and the DSL-connection 46 to the second application server 413. This path is shown as continuous lines 444 and 460.

In Figure 4 single-usage bonding of two DSL connections and the corresponding traffic distribution is shown. This is the simplest and elementary variant the other variants described herein are built upon. Bonding IAD 43 distributes its traffic collected in the first Home Network 431 on two paths. The first one is its own DSL connection 45 and the second one consists of a WLAN/Wi-Fi link and a DSL connection 46 in the neighborhood DSL. Bonding IAD 43 encrypts its traffic and sends it to the bonding server 42 on the two paths 453, 463. Thereby the traffic for each path can be encapsulated in a separate VPN. The necessary address handling is performed by the Bonding IAD 43 and the bonding server 42, which assembles the traffic to the original stream. In the opposite direction the procedure is performed accordingly with start at the bonding server 42 and the bonding IAD 43 assembles the traffic. The second IAD 44 performs the role of the Bonding Donor and only forwards the traffic received by the first IAD 43 or bonding server 42. The second Home Network 441 sends its traffic only over the second IAD 44 and DSL 46 as before. The traffic of the second Home Network should be completely prioritized on 46 by the second Home Network 44. This enables the operation of the bonding service without to be noticed in the second Home Network 44. This variant may be effective if DSL 46 has a much higher data transfer rate than DSL 45 or if the second IAD can only play the role of the Bonding Donor due to other reasons e.g. security, service provider affiliation or policies.

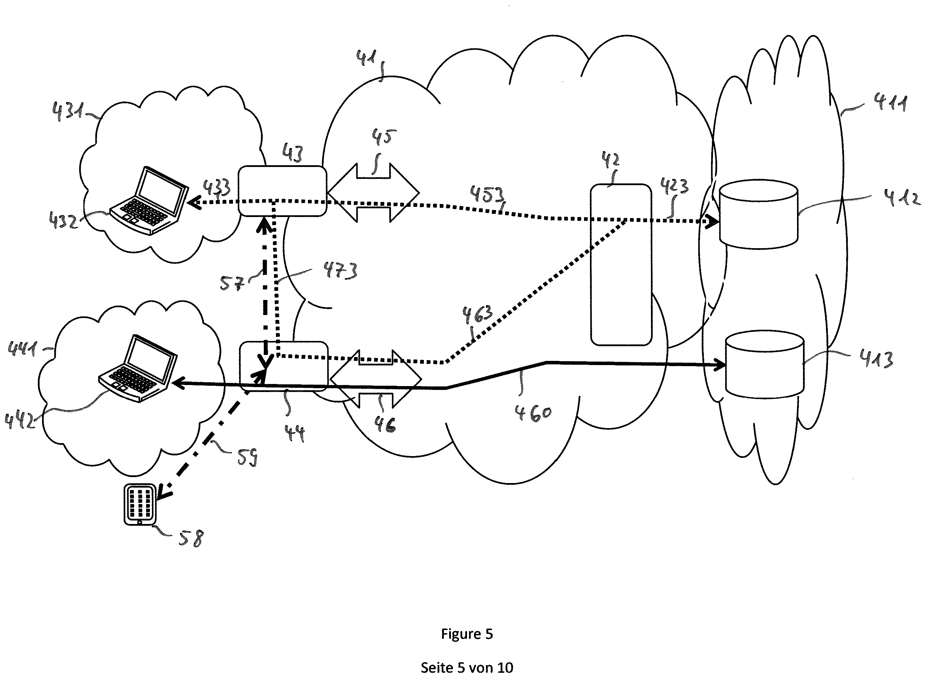

In Figure 5 a schematic diagram of a second embodiment of a system according to the invention is shown which is based on the first embodiment shown in Figure 4. The second embodiment differs from the first embodiment in that the second access device 44 is connected to a further device 58 of another user via a connection 59. This further device 58 is not part of the second Home Network 441. The user of the further device 58 can be an authorized member of a semi-public-privat-hotspot community. In this example, the connection 59 can be a Wi-Fi connection, which is illustrated as a dotted and dashed line. Furthermore, the peer-connection between the first and the second access devices 43, 44 is a Wi-Fi connection 57 shown as a dotted and dashed line.

As regards the description of the other parts, reference is made to the above description with reference to Figure 4.

Thus, figure 5 shows an extension of the variant described in Figure 4. Herein, the second IAD 44 offers a semi-public Wi-Fi access service for semi-public-private hotspot communities. Thereby a separate physical MAC entity (radio) or a virtual MAC entity (e.g. separate Wi-Fi SSID) is used to give the device 58, which is not part of the second Home Network 441, WAN access. This separate wireless entity is now also used for the wireless bonding link. Features or components of already existing system for secondary public access can be used and combined with the methods of the bonding service according to the present invention. Exemplary prioritization mechanism or access and security mechanism can be shared for both the bonding service and the service for secondary public access. From the view of the second IAD, the first IAD can be treated as an external device requesting secondary public access with no further privileges.

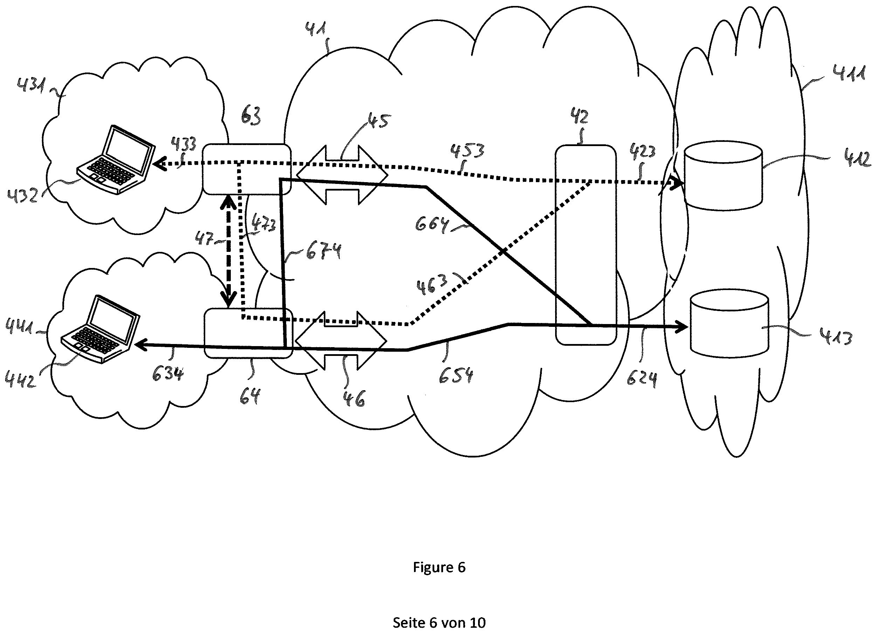

In Figure 6 a schematic diagram of a third embodiment of a system according to the invention is shown having a topology similar to the example shown in Figure 2b).

The third embodiment is similar to the first embodiment shown in Figure 4 except for a double-usage boding of two DSL-connections enabling pairing. In the third embodiment the first access device 63 and the second access device 64 have the same functionality. Thus, the first access device 63 can provide a connection between the computer 432 in the first Home Network 431 via DSL-connection 45, peer-connection 47 and the neighbor DSL-connection 46 to the bonding server 42 and further to the first application server 412. The respective connection is shown as dotted lines 433, 453, 473, 463, and 423 in Figure 6. The second access device 64 can provide connection between the computer 442 in the second Home Network 441 via a DSL-connection 46 and via the peer-connection 47 and the DSL-connection 45 to the bonding server 42 and further to the second application server 413. This connection is shown as continuous lines 634, 654, 674, 664, and 624 in Figure 6.

As regards the description of the other parts reference is made to the above description with reference to Figure 4.

Thus, in Figure 6 the first IAD 63 and the second IAD 64 have both roles, Bonding IAD and Bonding Donor. For the wireless link for bonding a Wi-Fi connection may be used which can be based on Wi-Fi Direct. Both IADs can benefit by improved throughput. This use case may be particularly effective if the DSL bit rates of the two IADs are nearly equal. Optional the two IADs can automatically contract a continuous liaison to build a pair. Long-lasting partnerships shall achieve fair and mutual benefits and high security. They simplify and stabilize the operation of the bonding system.

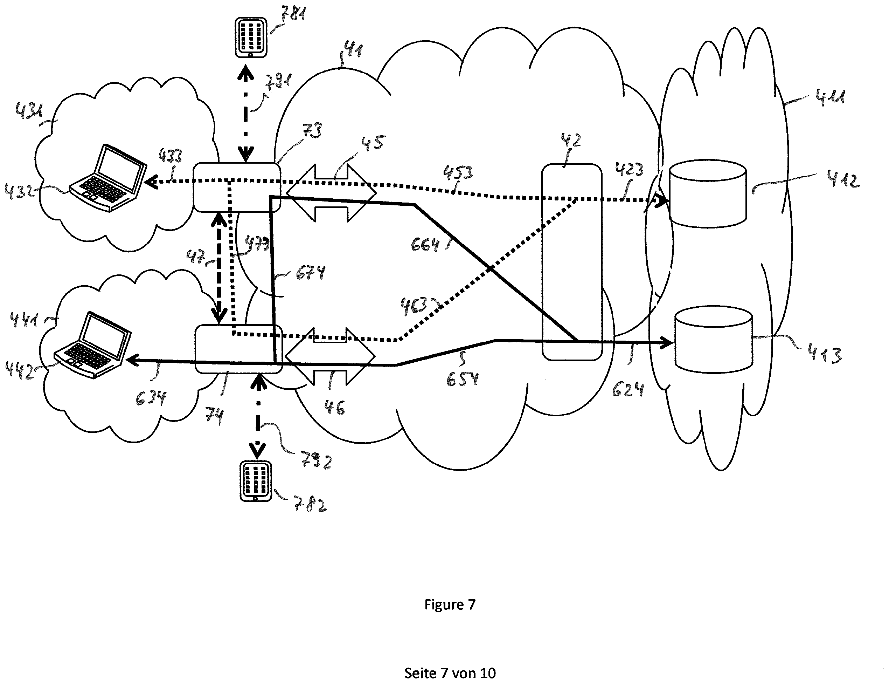

In Figure 7 a schematic diagram of a fourth embodiment of a system according to the invention is shown which is similar to the third embodiment shown in Figure 6. The fourth embodiment provides double-usage bonding of two DSL-connections enabling pairing and with the benefits for secondary public access. The fourth embodiment differs from the third embodiment in that the first access device 73 can be connected to a first device 781 via a connection 791. This first device 781 is not a part of the first Home Network 431. Alternatively or in addition the second access device 74 provides a connection for a second device 782 via a connection 792. The second device 782 being not a part of the second Home Network 441. As regards the further description of this connection to a further device reference is also made to the above discussion of the secondary Wi-Fi public access with respect to the second embodiment shown in Figure 5. As regards the description of the other parts reference is made to the above description with reference to Figure 6.

Thus, the variant is shown in Figure 7, is mainly an extension of Figure 6 to deliver bonding benefits also for secondary public access. Therefore, the first IAD and/or the second IAD additionally offer a semi-public Wi-Fi access service. Again separate MAC entities (e.g. separate Wi-Fi SSIDs) are used to give devices 781, 782, which are not part of the first and second home networks, WAN access. Furthermore a third MAC entity is used for the wireless link for bonding between the two IADs 73, 74. Advantage is that traffic from the Home Networks 431, 441 can be prioritized on the wireless link for bonding. With first priority the bonding service then is beneficiary for the home networks. But with downstream priority also the devices using secondary public access get profit by the bonding system without getting awareness of it.

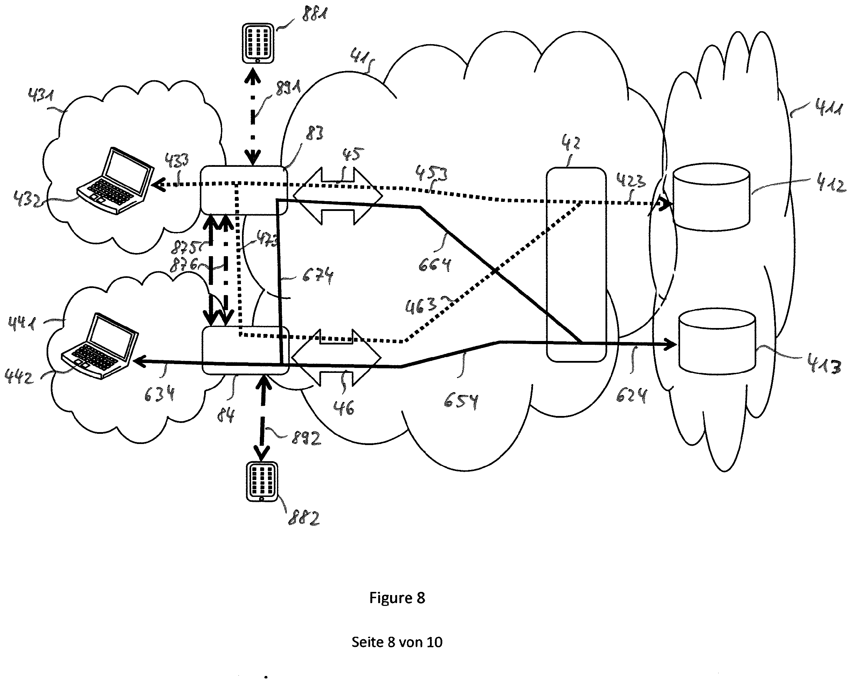

Figure 8 shows a schematic diagram of a fifth embodiment of a system according to the invention based on the embodiments shown in Figure 5 and 7. The fifth embodiment presents a double-usage bonding of two DSL-connections using secondary Wi-Fi public access for bonding, whereby more than one public MAC entities are exploited. Wherein a first device 881 is connected to the first access device 83 via a secondary Wi-Fi connection 891. Furthermore, the second device 882 is connected to the second access device 84 via a further secondary Wi-Fi connection 892. The first and the second access device 83 and 84 are further connected via one or two secondary Wi-Fi connections 875 and 876. As regards the description of the other parts reference is made to the above description with reference to Figure 7.

This fifth embodiment can also be regarded as an extension of the variant "Single-usage bonding of two DSL connections using secondary Wi-Fi public access for bonding (Figure 5)" with the objective of double-usage bonding. In Figure 8 now double-usage bonding is added in the following way: Again the first IAD 83 and the second IAD 84 have both roles, Bonding IAD and Bonding Donor. For the bonding link the same MAC entities as for semi-public Wi-Fi access are used. As sketched in Figure 8 the two MAC entities of the first IAD and the second IAD can be used simultaneously for bonding. If several radio frequency modules on different channels are available the traffic load can be balanced on these channels. This can improve the throughput experience for both the home network user and the semi-public Wi-Fi access user. Again features or components of already existing system for secondary public can be used and combined with the methods of the bonding service.

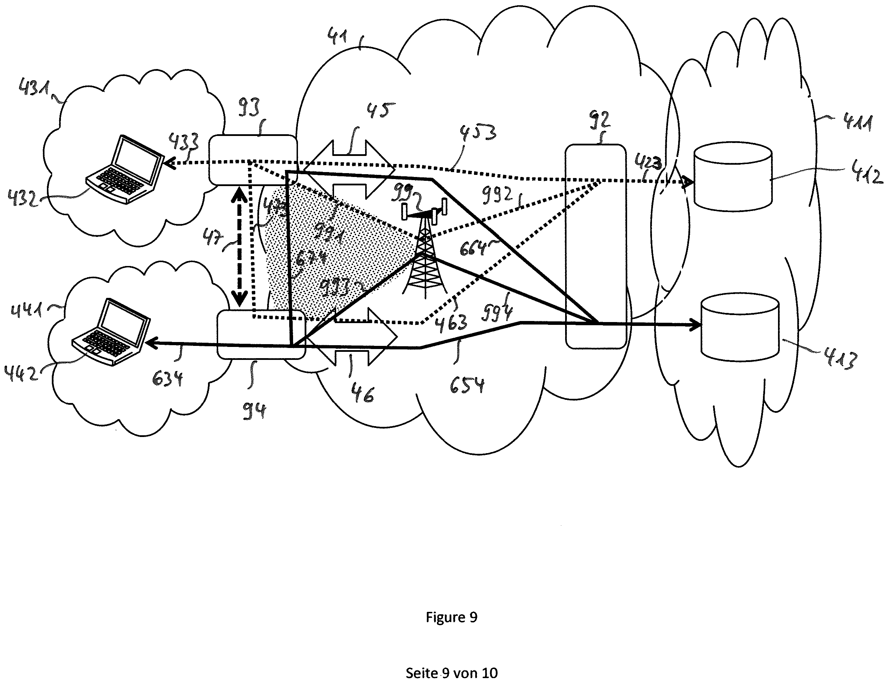

In Figure 9 a schematic diagram of the sixth embodiment of a system according to the invention is shown. This embodiment represents the double-usage bonding of two DSL-connections based on Wi-Fi or LTD Direct for bonding with optionally using an LTE link to a Macro Base Station as a third path to the bonding server. The sixth embodiment is based on a third embodiment as shown in Figure 6. The sixth embodiment additionally comprises a Macro Base Station 99 which provides a third path between the first access device 93 and the bonding server 92 via a first link 991 between the Macro Base Station 99 and the first access device 93 and a second link 992 between the Macro Base Station 99 and the bonding server 92. The Macro Base Station 99 further provides a third path between the second access device 94 and the bonding server 92 via a third link 993 and a fourth link 994.

As regards the other components of the sixth embodiment, reference is made to the description of the third embodiment.

Such an additional third path can also be provided in any of the other embodiments described with reference to Figure 4, 5, 7, and 8.

Thus, Figure 9 shows the insertion of a mobile network like LTE in the double usage scenario. The IADs 93, 94 now additionally contain modules for the connectivity to the mobile network as illustrated by the base station 99.

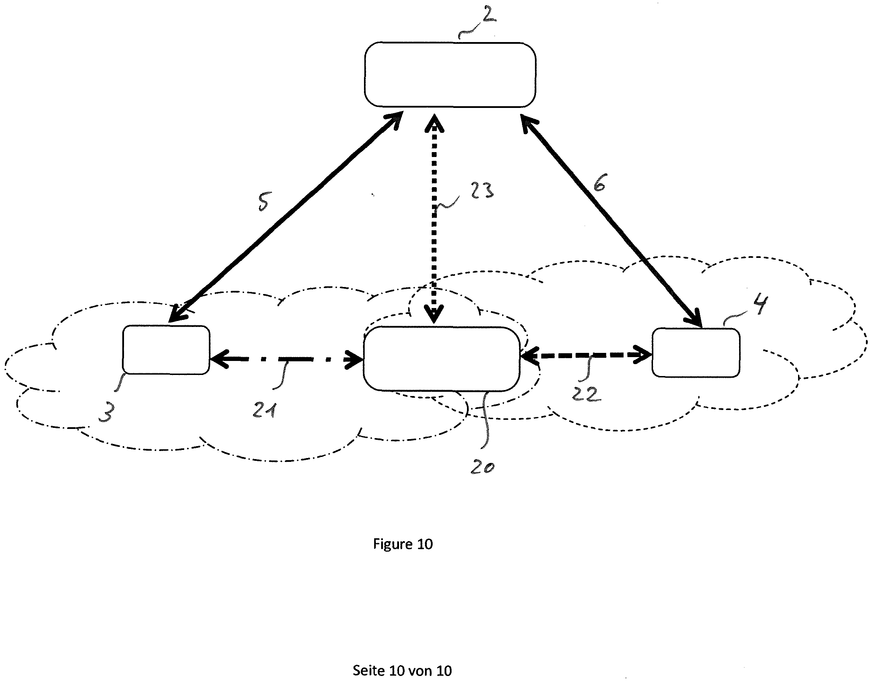

Figure 10 shows a schematic diagram of a further embodiment of the invention based on Figure 1 which comprises an optional transfer device 20. It contains several separate physical MAC entities (radios) or virtual MAC entities to implement wireless links for bonding and optional a module for mobile connectivity (e.g. LTE module). The transfer device 20 can be used as a range extender to extend the wireless range for bonding between the first access device 3 and the second access device 4. Alternatively or additionally the transfer device can increase the throughput by enabling higher modulation schemes of the wireless link. It can act as gateway if WLAN home networks with different radio channels are used for bonding. An advantageous feature of the Transfer Device is to support service discovery of the bonding service over the extended range or across its gateway functionality. Since computing power can be available in the transfer device 20, some functionalities of the bonding service can be also integrated in the transfer device e.g. to unload the IADs. The transfer device 20 may communicate with the bonding server via a connection 23. The peer-connection between two access devices can be provided by connections 21 and 22.

The embodiment as described with reference to Figure 10 can be combined with any of the above described embodiments.

As the present invention may be embodied in several forms without departing from the scope or essential characteristics thereof, it should be understood that the above-described embodiments are not limited by any of the details of the foregoing descriptions, unless otherwise specified, but rather should be construed broadly within the scope as defined in the appended claims.

### References

[1] "http://www.viprinet.com/de/technology/principle," [Online]. Available: http://www.viprinet.com/de/technology/principle.
[2] IETF, "Request for Comments: 6182, "Architectural Guidelines for Multipath TCP Development"," [Online]. Available: http://www.rfc-editor.org/rfc/pdfrfc/rfc6182. txt.pdf.
[3] S. Kini, "Multipath transmission control protocol proxy". Patent US 2012/0093150 A1.
[4] "http://www.pcwelt.de/ratgeber/Mehr-Tempo-Mit-zwei-DSL-Leitungen-gleichzeitig-surfen-5000.html," [Online]. Available: http://www.pcwelt.de/ratgeber/Mehr-Tempo-Mit-zwei-DSL-Leitungen-gleichzeitig-surfen-5000.html.
[5] V. Manilici, "Flow-Based Routing in Community Networks", Berlin: TU Berlin, 2009.
[6] "http://corp.fon.com/en," [Online]. Available: http://corp.fon.com/en.
[7] "http://www.telekom.de/privatkunden/internet/extras/internet-extras/hotspot/wlan-togo," [Online]. Available: http://www.telekom.de/privatkunden/internet/extras/internet-extras/hotspot/wlan-to-go.
[8] IEEE-Computer-Society, "IEEE Standard for Information technology-Telecommunications and information exchange between systems- Local and metropolitan area networks - Specific requirements Part 11: Wireless LAN Medium Access Control (MAC) and Physical Layer (PHY) Specifications", IEEE Standards Association, 2012.
[9] "Wi-Fi Peer-to-Peer (P2P) Technical Specification", Wi-Fi Alliance Technical Committee - P2P Task Group, 2010.
[10] Qualcomm, "LTE Direct - Operator enabled proximity services", 2013.
[11] 3GPP, Overview of 3GPP Release 12 V0.1.0 (2013-09), 2013.

### Acronyms

- 3GPP: 3rd Generation Partnership Project
- ANQP: Access Network Query Protocol
- DSL: Digital Subscriber Line
- GAS: Generic Advertisement Service
- IAD: Integrated Access Device
- IEEE: Institute of Electrical and Electronics Engineers
- IETF: Internet Engineering Task Force
- LAN: Local Area Network
- LTE: Long-Term Evolution
- MAC: Media Access Control
- MPTCP: Multi-Path-TCP
- SSID: Service Set Identifier
- TCP: Transmission Control Protocol
- VPN: Virtual Private Network
- WAN: Wide Area Network
- Wi-Fi: Branding name for wireless local area networks specified by Wi-Fi Alliance
- WLAN: Wireless Local Area Network: Term used for wireless local area network

## Claims

1. Multipath bonding system for bonding multipath-TCP, MP-TCP, connections to the internet and a wide area network (1) in a mobile wireless environment comprising:
at least a first and a second access device (4); and at least one bonding server (2),
wherein the first access device (3) is configured to provide a first connection (5) between the first access device (3) and at least one of the internet and the wide area network (1),
wherein the second access device (4) is configured to provide a second connection (6) between the second access device (4) and at least one of the internet and the wide area network (1),
wherein the first and second access devices (4) are configured to be connected to each other via a wireless peer-connection (7, 9),
wherein the at least one bonding server (2) is provided between the at least first and second access device (4) and the at least one of the internet and the wide area network (1),
wherein
(a) uplink data is to be transferred from the first access device (3) to the at least one bonding server (2),
wherein the at least one bonding server (2) and/or the first access device (3) is/are configured to transfer one part of the uplink data from the first access device (3) to the at least one bonding server (2) and is/are configured to transfer the other part of the uplink data from the first access device (3) via the peer-connection (7, 9) to the second access device (4) and further to the at least one bonding server (2), and
wherein the at least one bonding server (2) and/or the first access device (3) is/are further configured to set up first uplink amounts of the one part of the uplink data and the other part of the uplink data,
and
(b) downlink data is to be transferred from the at least one bonding server (2) to the first access device (3),
wherein the at least one bonding server (2) and/or the first access device (3) is/are configured to transfer one part of the downlink data from the at least one bonding server (2) to the first access device (3) and is/are configured to transfer the other part of the downlink data from the at least one bonding server (2) to the second access device (4) and via the peer-connection (7, 9) to the first access device (3), and
wherein the at least one bonding server (2) and/or the first access device (3) is/are further configured to set up first downlink amounts of the one part of the downlink data and the other part of the downlink data.

2. System according to claim 1, wherein the first access device (3) and/or the second access device (4) is/are configured to set up second uplink amounts of the one part of the uplink data and the other part of the uplink data, wherein the second uplink amount of the one part of the uplink data is preferably greater than the respective first uplink amount, and the second uplink amount of the other part of the uplink data is preferably smaller than the respective first uplink amount, or
wherein the first access device (3) and/or the second access device (4) is/are configured to set up second downlink amounts of the one part of the downlink data and the other part of the downlink data, wherein the second downlink amount of the one part of the downlink data is preferably greater than the respective first downlink amount, and the second downlink amount of the other part of the downlink data is preferably smaller than the respective downlink amount.

3. System according to claim 1 or 2, further comprising at least one further selected access device selected from a plurality of access devices,
wherein each further selected access device is configured to provide a respective connection between said further selected access device and at least one of the internet and the wide area network (1), and
wherein each further selected access device is configured to be connected to at least another access device via a peer-connection (7, 9) and optionally wherein each further selected access device is configured to transfer uplink data from another access device to the at least one bonding server (2)
and
wherein each further selected access device is configured to transfer downlink data from the at least one bonding server (2) to another access device.

4. System according to any of claims 1 to 3, wherein each access device is connected to at least one of a respective home network (431, 441) and a respective local area network.

5. System according to claim 3 or 4, wherein the at least one bonding server (2) and/or the first, the second and the at least one further selected access device is/are configured to perform the selection of the access devices and wherein the selected access devices are configured to build at least a pair or at least a small group for bonding in a plurality of access devices wherein the bonding server (2) is configured to reorganize existing pairs or small groups if further access devices have to be selected and
the at least one bonding server (2) and/or the first, the second and the at least one further selected access device comprises a memory for storing a bonding table comprising information with respect to the bonding relationship of three or more access devices and at least one bonding server (2) wherein the information stored in the memory can preferably be adapted dynamically to the current or forecasted bonding possibilities.

6. System according to any of claims 1 to 5, wherein the at least one bonding server (2) and/or the first, the second and the at least one further selected access device is/are configured to set up the respective uplink amounts of the one part of the uplink data, the other part of the uplink data and a further part of the uplink data and
wherein the at least one bonding server (2) and/or the first, the second and the at least one further selected access device is/are configured to set up the respective downlink amounts of the one part of the downlink data, the other part of the downlink data and a further part of the downlink data.

7. System according to any of claims 1 to 6, wherein at least one of the access devices of the system comprises secondary public wireless means, and
wherein the peer-connection (7, 9) between the at least one access device comprising the secondary public wireless means, and at least one other access device of the system is performed by using the secondary public wireless means.

8. System according to any of claims 1 to 7, wherein at least one of the access devices of the system is configured to send or request information to or from other access devices of the system and/or the at least one bonding server (2) wherein the information comprises at least one of the following properties of the at least one of the access devices: existence, model, firmware, unique identifier, general availability for bonding connections, current availability for bonding connections, current traffic, average traffic, overall traffic, capacity available for bonding connections, time of high traffic, time of low traffic, and time-traffic relation.

9. System according to any of claims 1 to 8, wherein at least one of the access devices of the system comprises means for establishing a mobile ad-hoc network,
wherein at least one other access device of the system is configured to connect to said mobile ad-hoc network, and
wherein the peer-connection (7, 9) between the at least one access device comprising means for establishing a mobile ad-hoc network and the at least one other access device being configured to connect to said mobile ad-hoc network is performed by said mobile ad-hoc network.

10. System according to any of claims 1 to 9, further comprising a mobile base station being configured to at least partially transfer uplink data from at least one of the access devices of the system to the at least one bonding server (2) and/or being configured to at least partially transfer downlink data from the at least one bonding server (2) to at least one of the access devices of the system and optionally wherein at least one of the access devices of the system is configured to transfer uplink data from at least one of the access devices to the at least one bonding server (2) via the mobile base station and/or is configured to at least partially transfer downlink data from the at least one bonding server (2) to at least one of the access devices of the system via the mobile base station.

11. System according to any of claims 1 to 10, the access device (3, 4) further comprising:
means for providing a connection between the access device and at least one of the internet and the wide area network (1),
means for connecting to one other access device via a peer-connection (7, 9), preferably a wireless peer-connection (7, 9).

12. System according to claim 11, the access device (3, 4) further comprising:
means for setting up second uplink amounts of the one part of the uplink data and the other part of the uplink data, wherein the second uplink amount of the one part of the uplink data is preferably greater than a/the respective first uplink amount and wherein the second uplink amount of the other part of the uplink data is preferably smaller than a/the respective first uplink amount and/or
means for receiving first downlink amounts of the one part of downlink data and the other part of the downlink data and
means for setting up second downlink amounts of the one part of the downlink data and the other part of the downlink data, wherein the second downlink amount of the one part of the downlink data is preferably greater than a/the respective first downlink amount and wherein the second downlink amount of the other part of the downlink data is preferably smaller than a/the respective first downlink amount.

13. System according to claim 11 or 12, the access device (3, 4) further comprising:
means for transferring uplink data from another access device to the at least one bonding server (2) via the peer-connection (7, 9) .

14. System according to any of claims 11 to 13, the access device (3, 4) further comprising:
means for transferring downlink data from the at least one bonding server (2) to the one other access device via the peer-connection (7, 9) and
wherein the access device is configured to be connected to at least one of a home network (431, 441) and a local area network.

15. System according to any of claims 11 to 14, the access device (3, 4) further comprising:
secondary public wireless means,
wherein the secondary public wireless means are configured to perform the peer-connection (7, 9) between the access device and at least one other access device and
means for sending or requesting information to or from other access devices of the system and/or the at least one bonding server (2) wherein the information comprises at least one of the following properties of the at least one of the access devices:
existence, model, firmware, unique identifier, general availability for bonding connections, current availability for bonding connections, current traffic, average traffic, overall traffic, capacity available for bonding connections, time of high traffic, time of low traffic, and time-traffic relation.

16. System according to any of claims 1 to 15, the bonding server (2) further comprising:
(a) means for transferring one part of the uplink data from a first access device (3) to the bonding server (2);
means for transferring the other part of the uplink data from the first access device (3) via a peer-connection (7, 9) to a second access device (4) and further to the bonding server (2), and
means for setting up first uplink amounts of the one part of the uplink data and the other part of the uplink data;
and/or
(b) means for transferring one part of the downlink data from the bonding server (2) to the first access device (3);
means for transferring the other part of the downlink data from the bonding server (2) to the second access device (4) and via the peer-connection (7, 9) to the first access device (3), and
means for setting up first downlink amounts of the one part of the downlink data and the other part of the downlink data.

17. System according to claim 16,
wherein the bonding server (2) is configured to be provided between at last one access device and at least one of the internet and the wide area network (1) and/or
the bonding server (2) further comprising:
means for selecting at least one access device from a plurality of access devices and/or
means for transferring one further part of the uplink data from the at least one further access device to the bonding server (2) and
means for setting up the uplink amounts of the one part of the uplink data, the other part of the uplink data and the further part of the uplink data or
means for transferring one further part of the downlink data from the bonding server (2) to the at least one further selected access device and
means for setting up the downlink amounts of the one part of the downlink data, the other part of the downlink data and the further part of the downlink data.

18. System according to any of claims 1 to 17, further comprising a range extender for bonding connections to the internet and/or a wide area network (1), the range extender comprising means for extending a peer-connection (7, 9) between the at least two access devices.

19. System according to claim 18, the range extender further comprising:
means for transferring uplink data from an access device to at least one the bonding server (2) and/or
means for transferring downlink data from the at least one bonding server (2) to the access device.

20. System according to claim 19, wherein the means for transferring uplink data from an access device to at least one the bonding server (2) and the means for transferring downlink data from the at least one bonding server (2) to the access device are configured to transfer said data wirelessly.

21. System according to claims 19 or 20, the range extender further comprising means for evaluating information send by an access device, the information comprising at least one of the following properties of the at least one of the access devices: existence, model, firmware, unique identifier, general availability for bonding connections, current availability for bonding connections, current traffic, average traffic, overall traffic, capacity available for bonding connections, time of high traffic, time of low traffic, and time-traffic relation.

22. Method performed on a multipath-TCP, MP-TCP, bonding system according to any of the preceding claims, the method comprising the steps of:
providing a first connection (5) between the first access device (3) and at least one of the internet and the wide area network (1),
providing a second connection (6) between the second access device (4) and at least one of the internet and the wide area network (1),
connecting the first and second access devices (4) to each other via a wireless peer-connection (7, 9),
providing the at least one bonding server (2) between the at least first and second access device (4) and the at least one of the internet and the wide area network (1),
wherein
(a) uplink data is to be transferred from the first access device (3) to the at least one bonding server (2),
wherein the at least one bonding server (2) and/or the first access device (3) transfers/transfer one part of the uplink data from the first access device (3) to the at least one bonding server (2) and transfers/treansfer the other part of the uplink data from the first access device (3) via the peer-connection (7, 9) to the second access device (4) and further to the at least one bonding server (2), and wherein the at least one bonding server (2) and/or the first access device (3) further sets/set up first uplink amounts of the one part of the uplink data and the other part of the uplink data,
and
(b) downlink data is to be transferred from the at least one bonding server (2) to the first access device (3),
wherein the at least one bonding server (2) and/or the first access device (3) transfers/transfer one part of the downlink data from the at least one bonding server (2) to the first access device (3) and transfers/transfer the other part of the downlink data from the at least one bonding server (2) to the second access device (4) and via the peer-connection (7, 9) to the first access device (3), and wherein the at least one bonding server (2) and/or the first access device (3) is/ sets/set up first downlink amounts of the one part of the downlink data and the other part of the downlink data.

## Patentansprüche

1. Mehrwege-Bündelungssystem zum Bündeln von Mehrwege-TCP-, MP-TCP-, Verbindungen mit dem Internet und einem Weitverkehrsnetzwerk (1) in einer mobilen drahtlosen Umgebung, das aufweist:
wenigstens eine erste und eine zweite Zugangsvorrichtung (4); und wenigstens einen Bündelungsserver (2), wobei die erste Zugangsvorrichtung (3) konfiguriert ist, um eine erste Verbindung (5) zwischen der ersten Zugangsvorrichtung (3) und dem Internet und/oder dem Weitverkehrsnetz (1) bereitzustellen,
wobei die zweite Zugangsvorrichtung (4) konfiguriert ist, um eine zweite Verbindung (6) zwischen der zweiten Zugangsvorrichtung (4) und dem Internet und/oder dem Weitverkehrsnetz (1) bereitzustellen,
wobei die erste und die zweite Zugangsvorrichtungen (4) konfiguriert sind, um über eine drahtlose Partnerverbindung (7, 9) miteinander verbunden zu werden,
wobei der wenigstens eine Bündelungsserver (2) zwischen der wenigstens ersten und zweiten Zugangsvorrichtung (4) und dem Internet und/oder dem Weitverkehrsnetzwerk (1) bereitgestellt ist,
wobei
(a) Aufwärtsverbindungsdaten von der ersten Zugangsvorrichtung (3) an den wenigstens einen Bündelungsserver (2) übertragen werden sollen,
wobei der wenigstens eine Bündelungsserver (2) und/oder die erste Zugangsvorrichtung (3) konfiguriert ist/sind, um einen Teil der Aufwärtsverbindungsdaten von der ersten Zugangsvorrichtung (3) an den wenigstens einen Bündelungsserver (2) zu übertragen, und konfiguriert ist/sind, um den anderen Teil der Aufwärtsverbindungsdaten von der ersten Zugangsvorrichtung (3) über die Partnerverbindung (7, 9) an die zweite Zugangsvorrichtung (4) und ferner an den wenigstens einen Bündelungsserver (2) zu übertragen, und
wobei der wenigstens eine Bündelungsserver (2) und/oder die erste Zugangsvorrichtung (3) ferner konfiguriert ist/sind, um Aufwärtsverbindungsmengen des einen Teils der Aufwärtsverbindungsdaten und des anderen Teils der Aufwärtsverbindungsdaten zu organisieren,
und
(b) Abwärtsverbindungsdaten von dem wenigstens einen Bündelungsserver (2) an die erste Zugangsvorrichtung (3) übertragen werden sollen,
wobei der wenigstens eine Bündelungsserver (2) und/oder die erste Zugangsvorrichtung (3) konfiguriert ist/sind, um einen Teil der Abwärtsverbindungsdaten von dem wenigstens einen Bündelungsserver (2) an die erste Zugangsvorrichtung (3) zu übertragen, und konfiguriert ist/sind, um den anderen Teil der Abwärtsverbindungsdaten von dem wenigstens einen Bündelungsserver (2) an die zweite Zugangsvorrichtung (4) und über die Partnerverbindung (7, 9) an die erste Zugangsvorrichtung (3) zu übertragen, und
wobei der wenigstens eine Bündelungsserver (2) und/oder die erste Zugangsvorrichtung (3) ferner konfiguriert ist/sind, um erste Abwärtsverbindungsmengen des einen Teils der Abwärtsverbindungsdaten und des anderen Teils der Abwärtsverbindungsdaten zu organisieren.

2. System nach Anspruch 1, wobei die erste Zugangsvorrichtung (3) und/oder die zweite Zugangsvorrichtung (4) konfiguriert ist/sind, um zweite Aufwärtsverbindungsmengen des einen Teils der Aufwärtsverbindungsdaten und des anderen Teils der Aufwärtsverbindungsdaten zu organisieren, wobei die zweite Aufwärtsverbindungsmenge des einen Teils der Aufwärtsverbindungsdaten vorzugsweise größer als die jeweilige erste Aufwärtsverbindungsmenge ist, und wobei die zweite Aufwärtsverbindungsmenge des anderen Teils der Aufwärtsverbindungsdaten vorzugsweise kleiner als die jeweilige erste Aufwärtsverbindungsmenge ist, oder
wobei die erste Zugangsvorrichtung (3) und/oder die zweite Zugangsvorrichtung (4) konfiguriert ist/sind, um zweite Abwärtsverbindungsmengen des einen Teils der Abwärtsverbindungsdaten und des anderen Teils der Abwärtsverbindungsdaten zu organisieren, wobei die zweite Abwärtsverbindungsmenge des einen Teils der Abwärtsverbindungsdaten vorzugsweise größer als die jeweilige erste Abwärtsverbindungsmenge ist, und die zweite Abwärtsverbindungsmenge des anderen Teils der Abwärtsverbindungsdaten vorzugsweise kleiner als die jeweilige Abwärtsverbindungsmenge ist.

3. System nach Anspruch 1 oder 2, das ferner wenigstens eine weitere ausgewählte Zugangsvorrichtung aufweist, die aus mehreren Zugangsvorrichtungen ausgewählt wird,
wobei jede weitere ausgewählte Zugangsvorrichtung konfiguriert ist, um eine jeweilige Verbindung zwischen der weiteren ausgewählten Zugangsvorrichtung und dem Internet und/oder dem Weitverkehrsnetz (1) bereitzustellen, und
wobei jede weitere ausgewählte Zugangsvorrichtung konfiguriert ist, um über eine Partnerverbindung (7, 9) mit wenigstens einer anderen Zugangsvorrichtung verbunden zu werden, und wobei jede weitere ausgewählte Zugangsvorrichtung optional konfiguriert ist, um Aufwärtsverbindungsdaten von einer anderen Zugangsvorrichtung an den wenigstens einen Bündelungsserver (2) zu übertragen, und
wobei jede weitere ausgewählte Zugangsvorrichtung konfiguriert ist, um Abwärtsverbindungsdaten von dem wenigstens einen Bündelungsserver (2) an eine andere Zugangsvorrichtung zu übertragen.

4. System nach einem der Ansprüche 1 bis 3, wobei jede Zugangsvorrichtung mit einem jeweiligen Heimatnetzwerk (431, 441) und/oder einem jeweiligen lokalen Bereichsnetzwerk verbunden ist.

5. System nach Anspruch 3 oder 4, wobei der wenigstens eine Bündelungsserver (2) und/oder die erste, die zweite und die wenigstens eine weitere ausgewählte Zugangsvorrichtung konfiguriert ist/sind, um die Auswahl der Zugangsvorrichtungen durchzuführen, und wobei die ausgewählten Zugangsvorrichtungen konfiguriert sind, um wenigstens ein Paar oder wenigstens eine kleine Gruppe zum Bündeln mehrerer Zugangsvorrichtungen aufzubauen, wobei der Bündelungsserver (2) konfiguriert ist, um vorhandene Paare oder kleine Gruppen neu zu organisieren, wenn weitere Zugangsvorrichtungen ausgewählt werden müssen, und
wobei der wenigstens eine Bündelungsserver (2) und/oder die erste, die zweite und die wenigstens eine weitere ausgewählte Zugangsvorrichtung einen Speicher zum Speichern einer Bündelungstabelle aufweisen, die Informationen in Bezug auf die Bündelungsbeziehung der drei oder mehr Zugangsvorrichtungen und des wenigstens einen Bündelungsservers (2) aufweist, wobei die in dem Speicher gespeicherten Informationen vorzugsweise dynamisch an die aktuellen oder vorhergesagten Bündelungsmöglichkeiten angepasst werden können.

6. System nach einem der Ansprüche 1 bis 5, wobei der wenigstens eine Bündelungsserver (2) und/oder die erste, die zweite und die wenigstens eine weitere ausgewählte Zugangsvorrichtung konfiguriert ist/sind, um die jeweiligen Aufwärtsverbindungsmengen des einen Teils der Aufwärtsverbindungsdaten, des anderen Teils der Aufwärtsverbindungsdaten und eines weiteren Teils der Aufwärtsverbindungsdaten zu organisieren, und
wobei der wenigstens eine Bündelungsserver (2) und/oder die erste, die zweite und die wenigstens eine weitere ausgewählte Zugangsvorrichtung konfiguriert ist/sind, um die jeweiligen Abwärtsverbindungsmengen des einen Teils der Abwärtsverbindungsdaten, des anderen Teils der Abwärtsverbindungsdaten und eines weiteren Teils der Abwärtsverbindungsdaten zu organisieren.

7. System nach einem der Ansprüche 1 bis 6, wobei wenigstens eine der Zugangsvorrichtungen des Systems eine sekundäre öffentliche drahtlose Einrichtung aufweist, und
wobei die Partnerverbindung (7, 9) zwischen der wenigstens einen Zugangsvorrichtung, welche die sekundäre öffentliche drahtlose Einrichtung aufweist, und wenigstens einer anderen Zugangsvorrichtung des Systems unter Verwendung der sekundären öffentlichen drahtlosen Einrichtung durchgeführt wird.

8. System nach einem der Ansprüche 1 bis 7, wobei wenigstens eine der Zugangsvorrichtungen des Systems konfiguriert ist, um Informationen an andere Zugangsvorrichtungen des Systems und/oder den wenigstens einen Bündelungsserver (2) zu senden oder von diesen anzufordern, wobei die Informationen wenigstens eine der folgenden Eigenschaften der wenigstens einen der Zugangsvorrichtungen aufweisen: Vorhandensein, Modell, Firmware, eindeutige Kennung, allgemeine Verfügbarkeit für Bündelverbindungen, aktuelle Verfügbarkeit für Bündelverbindungen, aktueller Verkehr, durchschnittlicher Verkehr, Gesamtverkehr, Kapazität, die für Bündelverbindungen verfügbar ist, Zeit hohen Verkehrs, Zeit geringen Verkehrs und Zeit-Verkehrs-Beziehung.

9. System nach einem der Ansprüche 1 bis 8, wobei wenigstens eine der Zugangsvorrichtungen des Systems eine Einrichtung zum Einrichten eines mobilen Ad-hoc-Netzwerks aufweist,
wobei wenigstens eine andere Zugangsvorrichtung des Systems konfiguriert ist, um mit dem mobilen Ad-hoc-netzwerk zu verbinden, und
wobei die Partnerverbindung (7, 9) zwischen der wenigstens einen Zugangsvorrichtung, die eine Einrichtung zum Einrichten eines mobilen Ad-hoc-Netzwerks aufweist, und der wenigstens einen anderen Zugangsvorrichtung, die konfiguriert ist, um mit dem mobilen Ad-hoc-Netzwerk zu verbinden, durch das mobile Ad-hoc-Netzwerk durchgeführt wird.

10. System nach einem der Ansprüche 1 bis 9, das ferner eine mobile Basisstation aufweist, die konfiguriert ist, um Aufwärtsverbindungsdaten wenigstens teilweise von wenigstens einer der Zugangsvorrichtungen des Systems an den wenigstens einen Bündelungsserver (2) zu übertragen, und/oder konfiguriert ist, um Abwärtsverbindungsdaten wenigstens teilweise von dem wenigstens einen Bündelungsserver (2) an wenigstens eine der Zugangsvorrichtungen des Systems zu übertragen, und wobei optional wenigstens eine der Zugangsvorrichtungen des Systems konfiguriert ist, um Aufwärtsverbindungsdaten von wenigstens einer der Zugangsvorrichtungen über die mobile Basisstation an den wenigstens einen Bündelungsserver (2) zu übertragen, und/oder konfiguriert ist, um Abwärtsverbindungsdaten wenigstens teilweise von dem wenigstens einen Bündelungsserver (2) über die mobile Basisstation an wenigstens eine der Zugangsvorrichtungen des Systems zu übertragen.

11. System nach einem der Ansprüche 1 bis 10, wobei die Zugangsvorrichtung (3, 4) ferner aufweist:
eine Einrichtung zum Bereitstellen einer Verbindung zwischen der Zugangsvorrichtung und dem Internet und/oder dem Weitverkehrsnetz (1),
eine Einrichtung zum Verbinden mit einer anderen Zugangsvorrichtung über eine Partnerverbindung (7, 9), vorzugsweise über eine drahtlose Partnerverbindung (7, 9).

12. System nach Anspruch 11, wobei die Zugangsvorrichtung (3, 4) ferner aufweist:
eine Einrichtung zum Organisieren zweiter Aufwärtsverbindungsmengen des einen Teils der Aufwärtsverbindungsdaten und des anderen Teils der Aufwärtsverbindungsdaten, wobei die zweite Aufwärtsverbindungsmenge des einen Teils der Aufwärtsverbindungsdaten vorzugsweise größer als eine/die jeweilige erste Aufwärtsverbindungsmenge ist, und wobei die zweite Aufwärtsverbindungsmenge des anderen Teils der Aufwärtsverbindungsdaten vorzugsweise kleiner als eine/die jeweilige erste Aufwärtsverbindungsmenge ist, und/oder
eine Einrichtung zum Empfangen erster Abwärtsverbindungsmengen des einen Teils der Abwärtsverbindungsdaten und des anderen Teils der Abwärtsverbindungsdaten, und
eine Einrichtung zum Organisieren zweiter Abwärtsverbindungsmengen des einen Teils der Abwärtsverbindungsdaten und des anderen Teils der Abwärtsverbindungsdaten, wobei die zweite Abwärtsverbindungsmenge des einen Teils der Abwärtsverbindungsdaten vorzugsweise größer als eine/die jeweilige erste Abwärtsverbindungsmenge ist, und wobei die zweite Abwärtsverbindungsmenge des anderen Teils der Abwärtsverbindungsdaten vorzugsweise kleiner als eine/die jeweilige erste Abwärtsverbindungsmenge ist.

13. System nach Anspruch 11 oder 12, wobei die Zugangsvorrichtung (3, 4) ferner aufweist:
eine Einrichtung zum Übertragen von Aufwärtsverbindungsdaten von einer anderen Zugangsvorrichtung über die Partnerverbindung (7, 9) an den wenigstens einen Bündelungsserver (2).

14. System nach einem der Ansprüche 11 bis 13, wobei die Zugangsvorrichtung (3, 4) ferner aufweist:
eine Einrichtung zum Übertragen von Abwärtsverbindungsdaten von dem wenigstens einen Bündelungsserver (2) über die Partnerverbindung (7, 9) an die andere Zugangsvorrichtung, und
wobei die Zugangsvorrichtung konfiguriert ist, um mit einem Heimatnetzwerk (431, 441) und/oder einem lokalen Bereichsnetzwerk verbunden zu werden.

15. System nach einem der Ansprüche 11 bis 14, wobei die Zugangsvorrichtung (3, 4) ferner aufweist:
eine sekundäre öffentliche drahtlose Einrichtung,
wobei die sekundäre öffentliche drahtlose Einrichtung konfiguriert ist, um die Partnerverbindung (7, 9) zwischen der Zugangsvorrichtung und wenigstens einer anderen Zugangsvorrichtung durchzuführen, und
eine Einrichtung, um Informationen an andere Zugangsvorrichtungen des Systems und/oder den wenigstens einen Bündelungsserver (2) zu senden oder von diesen anzufordern, wobei die Informationen wenigstens eine der folgenden Eigenschaften der wenigstens einen der Zugangsvorrichtungen aufweisen: Vorhandensein, Modell, Firmware, eindeutige Kennung, allgemeine Verfügbarkeit für Bündelverbindungen, aktuelle Verfügbarkeit für Bündelverbindungen, aktueller Verkehr, durchschnittlicher Verkehr, Gesamtverkehr, Kapazität, die für Bündelverbindungen verfügbar ist, Zeit hohen Verkehrs, Zeit geringen Verkehrs und Zeit-Verkehrs-Beziehung.

16. System nach einem der Ansprüche 1 bis 15, wobei der Bündelungsserver (2) ferner aufweist:
(a) eine Einrichtung zum Übertragen eines Teils der Aufwärtsverbindungsdaten von einer ersten Zugangsvorrichtung (3) an den Bündelungsserver (2);
eine Einrichtung zum Übertragen des anderen Teils der Aufwärtsverbindungsdaten von der ersten Zugangsvorrichtung (3) über eine Partnerverbindung (7, 9) an eine zweite Zugangsvorrichtung (4) und weiter an den Bündelungsserver (2), und
eine Einrichtung zum Organisieren erster Aufwärtsverbindungsmengen des einen Teils der Aufwärtsverbindungsdaten und des anderen Teils der Aufwärtsverbindungsdaten;
und/oder
(b) eine Einrichtung zum Übertragen eines Teils der Abwärtsverbindungsdaten von dem Bündelungsserver (2) an die erste Zugangsvorrichtung (3);
eine Einrichtung zum Übertragen des anderen Teils der Abwärtsverbindungsdaten von dem Bündelungsserver (2) an die zweite Zugangsvorrichtung (4) und über die Partnerverbindung (7, 9) an die erste Zugangsvorrichtung (3), und
eine Einrichtung zum Organisieren erster Abwärtsverbindungsmengen des einen Teils der Abwärtsverbindungsdaten und des anderen Teils der Abwärtsverbindungsdaten.

17. System nach Anspruch 16,
wobei der Bündelungsserver (2) konfiguriert ist, um zwischen der wenigstens einen Zugangsvorrichtung und dem Internet und/oder dem Weitverkehrsnetz (1) bereitgestellt zu werden,
wobei der Bündelungsserver (2) ferner aufweist:
eine Einrichtung zum Auswählen wenigstens einer Zugangsvorrichtung aus mehreren Zugangsvorrichtungen, und/oder
eine Einrichtung zum Übertragen eines weiteren Teils der Aufwärtsverbindungsdaten von der wenigstens einen weiteren Zugangsvorrichtung an den Bündelungsserver (2), und
eine Einrichtung zum Organisieren von Aufwärtsverbindungsmengen des einen Teils der Aufwärtsverbindungsdaten, des anderen Teils der Aufwärtsverbindungsdaten und des weiteren Teils der Aufwärtsverbindungsdaten oder
eine Einrichtung zum Übertragen eines weiteren Teils der Abwärtsverbindungsdaten von dem Bündelungsserver (2) an die wenigstens eine weitere ausgewählte Zugangsvorrichtung und
eine Einrichtung zum Organisieren der Abwärtsverbindungsmengen des einen Teils der Abwärtsverbindungsdaten, des anderen Teils der Abwärtsverbindungsdaten und des weiteren Teils der Abwärtsverbindungsdaten.

18. System nach einem der Ansprüche 1 bis 17, das ferner einen Bereichserweiterer für Bündelungsverbindungen mit dem Internet und/oder einem Weitverkehrsnetzwerk (1) aufweist, wobei der Bereichserweiterer eine Einrichtung zum Erweitern einer Partnerverbindung (7, 9) zwischen den wenigstens zwei Zugangsvorrichtungen aufweist.

19. System nach Anspruch 18, wobei der Bereichserweiterer ferner aufweist:
eine Einrichtung zum Übertragen von Aufwärtsverbindungsdaten von der Zugangsvorrichtung an den wenigstens einen Bündelungsserver (2) und/oder
eine Einrichtung zum Übertragen von Abwärtsverbindungsdaten von dem wenigstens einen Bündelungsserver (2) an die Zugangsvorrichtung.

20. System nach Anspruch 19, wobei die Einrichtung zum Übertragen von Aufwärtsverbindungsdaten von einer Zugangsvorrichtung an den wenigstens einen Bündelungsserver (2) und die Einrichtung zum Übertragen von Abwärtsverbindungsdaten von dem wenigstens einen Bündelungsserver (2) an die Zugangsvorrichtung konfiguriert sind, um die Daten drahtlos zu übertragen.

21. System nach den Ansprüchen 19 oder 20, wobei der Bereichserweiterer ferner eine Einrichtung zum Auswerten von Informationen, die von einer Zugangsvorrichtung gesendet werden, aufweist, wobei die Informationen wenigstens eine der folgenden Eigenschaften der wenigstens einen der Zugangsvorrichtungen aufweisen: Vorhandensein, Modell, Firmware, eindeutige Kennung, allgemeine Verfügbarkeit für Bündelverbindungen, aktuelle Verfügbarkeit für Bündelverbindungen, aktueller Verkehr, durchschnittlicher Verkehr, Gesamtverkehr, Kapazität, die für Bündelverbindungen verfügbar ist, Zeit hohen Verkehrs, Zeit geringen Verkehrs und Zeit-Verkehrs-Beziehung.

22. Verfahren, das in einem Mehrwege-TCP-, MP-TCP-, Bündelungssystem nach einem der vorhergehenden Ansprüche durchgeführt wird, wobei das Verfahren die folgenden Schritte aufweist:
Bereitstellen einer ersten Verbindung (5) zwischen der ersten Zugangsvorrichtung (3) und dem Internet und/oder dem Weitverkehrsnetz (1),
Bereitstellen einer zweiten Verbindung (6) zwischen der zweiten Zugangsvorrichtung (4) und dem Internet und/oder dem Weitverkehrsnetz (1),
Verbinden der ersten und der zweiten Zugangsvorrichtung (4) miteinander über eine drahtlose Partnerverbindung (7, 9),
Bereitstellen wenigstens eines Bündelungsservers (2) wenigstens zwischen der ersten und der zweiten Zugangsvorrichtung und dem Internet und/oder dem Weitverkehrsnetzwerk (1),
wobei
(a) Aufwärtsverbindungsdaten von der ersten Zugangsvorrichtung (3) an den wenigstens einen Bündelungsserver (2) übertragen werden sollen,
wobei der wenigstens eine Bündelungsserver (2) und/oder die erste Zugangsvorrichtung (3) einen Teil der Aufwärtsverbindungsdaten von der ersten Zugangsvorrichtung (3) an den wenigstens einen Bündelungsserver (2) überträgt/übertragen und den anderen Teil der Aufwärtsverbindungsdaten von der ersten Zugangsvorrichtung (3) über die Partnerverbindung (7, 9) an die zweite Zugangsvorrichtung (4) und ferner an den wenigstens einen Bündelungsserver (2) überträgt/übertragen, und
wobei der wenigstens eine Bündelungsserver (2) und/oder die erste Zugangsvorrichtung (3) ferner Aufwärtsverbindungsmengen des einen Teils der Aufwärtsverbindungsdaten und des anderen Teils der Aufwärtsverbindungsdaten organisiert/en,
und
(b) Abwärtsverbindungsdaten von dem wenigstens einen Bündelungsserver (2) an die erste Zugangsvorrichtung (3) übertragen werden sollen,
wobei der wenigstens eine Bündelungsserver (2) und/oder die erste Zugangsvorrichtung (3) einen Teil der Abwärtsverbindungsdaten von dem wenigstens einen Bündelungsserver (2) an die erste Zugangsvorrichtung (3) überträgt/übertragen und den anderen Teil der Abwärtsverbindungsdaten von dem wenigstens einen Bündelungsserver (2) an die zweite Zugangsvorrichtung (4) und über die Partnerverbindung (7, 9) an die erste Zugangsvorrichtung (3) überträgt/übertragen, und
wobei der wenigstens eine Bündelungsserver (2) und/oder die erste Zugangsvorrichtung (3) ferner erste Abwärtsverbindungsmengen des einen Teils der Abwärtsverbindungsdaten und des anderen Teils der Abwärtsverbindungsdaten ist/organisiert/en.

## Revendications

1. Système de liaison multivoie pour des connexions TCP multivoies, MP-TCP, à l'Internet et à un réseau étendu (1) dans un environnement sans fil mobile, comprenant :
au moins un premier et un deuxième dispositif d'accès (4) ; et au moins un serveur de liaison (2), dans lequel le premier dispositif d'accès (3) est configuré pour fournir une première connexion (5) entre le premier dispositif d'accès (3) et au moins l'un de l'Internet et du réseau étendu (1),
dans lequel le deuxième dispositif d'accès (4) est configuré pour fournir une deuxième connexion (6) entre le deuxième dispositif d'accès (4) et au moins l'un de l'Internet et du réseau étendu (1),
dans lequel les premier et deuxième dispositifs d'accès (4) sont configurés pour être connectés l'un à l'autre via une connexion entre homologues sans fil (7, 9),
dans lequel l'au moins un serveur de liaison (2) est fourni entre les au moins premier et deuxième dispositifs d'accès (4) et les au moins un de l'Internet et du réseau étendu (1),
dans lequel
(a) des données de liaison montante doivent être transférées du premier dispositif d'accès (3) à l'au moins un serveur de liaison (2),
dans lequel l'au moins un serveur de liaison (2) et/ou le premier dispositif d'accès (3) est/sont configuré(s) pour transférer une partie des données de liaison montante du premier dispositif d'accès (3) à l'au moins un serveur de liaison (2) et est/sont configuré(s) pour transférer l'autre partie des données de liaison montante du premier dispositif d'accès (3) via la connexion entre homologues (7, 9) au deuxième dispositif d'accès (4) et en outre à l'au moins un serveur de liaison (2), et
dans lequel l'au moins un serveur de liaison (2) et/ou le premier dispositif d'accès (3) est/sont en outre configuré(s) pour instaurer des premières quantités de liaison montante de la partie des données de liaison montante et de l'autre partie des données de liaison montante,
et
(b) des données de liaison descendante doivent être transférées de l'au moins un serveur de liaison (2) au premier dispositif d'accès (3),
dans lequel l'au moins un serveur de liaison (2) et/ou le premier dispositif d'accès (3) est/sont configuré(s) pour transférer une partie des données de liaison descendante de l'au moins un serveur de liaison (2) au premier dispositif d'accès (3) et est/sont configuré(s) pour transférer l'autre partie des données de liaison descendante de l'au moins un serveur de liaison (2) au deuxième dispositif d'accès (4) et via la connexion entre homologues (7, 9) au premier dispositif d'accès (3), et
dans lequel l'au moins un serveur de liaison (2) et/ou le premier dispositif d'accès (3) est/sont en outre configuré(s) pour instaurer des premières quantités de liaison descendante de la partie des données de liaison descendante et de l'autre partie des données de liaison descendante.

2. Système selon la revendication 1, dans lequel le premier dispositif d'accès (3) et/ou le deuxième dispositif d'accès (4) est/sont configuré(s) pour instaurer des deuxièmes quantités de liaison montante de la partie des données de liaison montante et de l'autre partie des données de liaison montante, dans lequel la deuxième quantité de liaison montante de la partie des données de liaison montante est de préférence plus grande que la première quantité de liaison montante respective, et la deuxième quantité de liaison montante de l'autre partie des données de liaison montante est de préférence plus petite que la première quantité de liaison montante respective, ou
dans lequel le premier dispositif d'accès (3) et/ou le deuxième dispositif d'accès (4) est/sont configuré(s) pour instaurer des deuxièmes quantités de liaison descendante de la partie des données de liaison descendante et de l'autre partie des données de liaison descendante, dans lequel la deuxième quantité de liaison descendante de la partie des données de liaison descendante est de préférence plus grande que la première quantité de liaison descendante respective, et la deuxième quantité de liaison descendante de l'autre partie des données de liaison descendante est de préférence plus petite que la quantité de liaison descendante respective.

3. Système selon la revendication 1 ou 2, comprenant en outre au moins un dispositif d'accès supplémentaire sélectionné qui est sélectionné parmi une pluralité de dispositifs d'accès,
dans lequel chaque dispositif d'accès supplémentaire sélectionné est configuré pour fournir une connexion respective entre ledit dispositif d'accès supplémentaire sélectionné et au moins l'un de l'Internet et du réseau étendu (1), et
dans lequel chaque dispositif d'accès supplémentaire sélectionné est configuré pour être connecté à au moins un autre dispositif d'accès via une connexion entre homologues (7, 9) et facultativement
dans lequel chaque dispositif d'accès supplémentaire sélectionné est configuré pour transférer des données de liaison montante d'un autre dispositif d'accès à l'au moins un serveur de liaison (2)
et
dans lequel chaque dispositif d'accès supplémentaire sélectionné est configuré pour transférer des données de liaison descendante de l'au moins un serveur de liaison (2) à un autre dispositif d'accès.

4. Système selon l'une quelconque des revendications 1 à 3, dans lequel chaque dispositif d'accès est connecté à au moins l'un d'un réseau domestique (431, 441) respectif et d'un réseau local respectif.

5. Système selon la revendication 3 ou 4, dans lequel l'au moins un serveur de liaison (2) et/ou le premier, le deuxième et l'au moins un dispositif d'accès supplémentaire sélectionné est/sont configurés pour réaliser la sélection des dispositifs d'accès et dans lequel les dispositifs d'accès sélectionnés sont configurés pour construire au moins une paire ou au moins un petit groupe de liaison dans une pluralité de dispositifs d'accès dans lequel le serveur de liaison (2) est configuré pour réorganiser des paires ou des petits groupes existants si des dispositifs d'accès supplémentaires doivent être sélectionnés et
l'au moins un serveur de liaison (2) et/ou le premier, le deuxième et l'au moins un dispositif d'accès supplémentaire sélectionné comprend une mémoire pour stocker une table de liaison comprenant des informations par rapport à la relation de liaison de trois dispositifs d'accès ou plus et au moins un serveur de liaison (2), dans lequel les informations stockées dans la mémoire peuvent de préférence être adaptées dynamiquement aux possibilités de liaison actuelles ou prévues.

6. Système selon l'une quelconque des revendications 1 à 5, dans lequel l'au moins un serveur de liaison (2) et/ou le premier, le deuxième et l'au moins un dispositif d'accès supplémentaire sélectionné est/sont configuré(s) pour instaurer les quantités de liaison montante respectives de la partie des données de liaison montante, de l'autre partie des données de liaison montante et d'une partie supplémentaire des données de liaison montante et dans lequel l'au moins un serveur de liaison (2) et/ou le premier, le deuxième et l'au moins un dispositif d'accès supplémentaire sélectionné est/sont configuré(s) pour instaurer les quantités de liaison descendante respectives de la partie des données de liaison descendante, de l'autre partie des données de liaison descendante et d'une partie supplémentaire des données de liaison descendante.

7. Système selon l'une quelconque des revendications 1 à 6, dans lequel au moins l'un des dispositifs d'accès du système comprend des moyens sans fil publics secondaires, et
dans lequel la connexion entre homologues (7, 9) entre l'au moins un dispositif d'accès comprenant le moyen sans fil public secondaire, et au moins un autre dispositif d'accès du système est réalisée en utilisant le moyen sans fil public secondaire.

8. Système selon l'une quelconque des revendications 1 à 7, dans lequel au moins l'un des dispositifs d'accès du système est configuré pour envoyer ou demander des informations à d'autres dispositifs d'accès du système et/ou à l'au moins un serveur de liaison (2), dans lequel les informations comprennent au moins l'une des propriétés suivantes de l'au moins un des dispositifs d'accès : une existence, un modèle, un micrologiciel, un identifiant unique, une disponibilité générale pour des connexions de liaison, une disponibilité actuelle pour des connexions de liaison, un trafic actuel, un trafic moyen, un trafic global, une capacité disponible pour des connexions de liaison, un temps de trafic fort, un temps de trafic faible, et une relation temps-trafic.

9. Système selon l'une quelconque des revendications 1 à 8, dans lequel au moins l'un des dispositifs d'accès du système comprend un moyen pour établir un réseau mobile ad hoc,
dans lequel au moins un autre dispositif d'accès du système est configuré pour se connecter audit réseau mobile ad hoc, et
dans lequel la connexion entre homologues (7, 9) entre l'au moins un dispositif d'accès comprenant un moyen pour établir un réseau mobile ad hoc et l'au moins un autre dispositif d'accès configuré pour se connecter audit réseau mobile ad hoc est réalisée par ledit réseau mobile ad hoc.

10. Système selon l'une quelconque des revendications 1 à 9, comprenant en outre une station de base mobile configurée pour transférer au moins partiellement des données de liaison montante d'au moins l'un des dispositifs d'accès du système à l'au moins un serveur de liaison (2) et/ou configurée pour transférer au moins partiellement des données de liaison descendante de l'au moins un serveur de liaison (2) à au moins l'un des dispositifs d'accès du système et dans lequel facultativement au moins l'un des dispositifs d'accès du système est configuré pour transférer des données de liaison montante d'au moins l'un des dispositifs d'accès à l'au moins un serveur de liaison (2) via la station de base mobile et/ou configuré pour transférer au moins partiellement des données de liaison descendante de l'au moins un serveur de liaison (2) à au moins l'un des dispositifs d'accès du système via la station de base mobile.

11. Système selon l'une quelconque des revendications 1 à 10, le dispositif d'accès (3, 4) comprenant en outre :
un moyen de fourniture d'une connexion entre le dispositif d'accès et au moins l'un de l'Internet et du réseau étendu (1),
un moyen de connexion à un autre dispositif d'accès via une connexion entre homologues (7, 9), de préférence une connexion entre homologues sans fil (7, 9).

12. Système selon la revendication 11, le dispositif d'accès (3, 4) comprenant en outre :
un moyen d'instauration de deuxièmes quantités de liaison montante de la partie des données de liaison montante et de l'autre partie des données de liaison montante, dans lequel la deuxième quantité de liaison montante de la partie des données de liaison montante est de préférence plus grande qu'une/la première quantité de liaison montante respective et dans lequel la deuxième quantité de liaison montante de l'autre partie des données de liaison montante est de préférence plus petite qu'une/la première quantité de liaison montante respective et/ou
un moyen de réception de premières quantités de liaison descendante de la partie de données de liaison descendante et de l'autre partie des données de liaison descendante et
un moyen d'instauration de deuxièmes quantités de liaison descendante de la partie des données de liaison descendante et de l'autre partie des données de liaison descendante, dans lequel la deuxième quantité de liaison descendante de la partie des données de liaison descendante est de préférence plus grande qu'une/la première quantité de liaison descendante respective et dans lequel la deuxième quantité de liaison descendante de l'autre partie des données de liaison descendante est de préférence plus petite qu'une/la première quantité de liaison descendante respective.

13. Système selon la revendication 11 ou 12, le dispositif d'accès (3, 4) comprenant en outre :
un moyen de transfert de données de liaison montante d'un autre dispositif d'accès à l'au moins un serveur de liaison (2) via la connexion entre homologues (7, 9).

14. Système selon l'une quelconque des revendications 11 à 13, le dispositif d'accès (3, 4) comprenant en outre :
un moyen de transfert de données de liaison descendante de l'au moins un serveur de liaison (2) à l'autre dispositif d'accès via la connexion entre homologues (7, 9) et
dans lequel le dispositif d'accès est configuré pour être connecté à au moins l'un d'un réseau domestique (431, 441) et d'un réseau local.

15. Système selon l'une quelconque des revendications 11 à 14, le dispositif d'accès (3, 4) comprenant en outre :
un moyen sans fil public secondaire,
dans lequel un moyen sans fil public secondaire est configuré pour réaliser la connexion entre homologues (7, 9) entre le dispositif d'accès et au moins un autre dispositif d'accès et un moyen d'envoi ou de demande d'informations à d'autres dispositifs d'accès du système et/ou à l'au moins un serveur de liaison (2), dans lequel les informations comprennent au moins l'une des propriétés suivantes de l'au moins un des dispositifs d'accès : une existence, un modèle, un micrologiciel, un identifiant unique, une disponibilité générale pour des connexions de liaison, une disponibilité actuelle pour des connexions de liaison, un trafic actuel, un trafic moyen, un trafic global, une capacité disponible pour des connexions de liaison, un temps de trafic fort, un temps de trafic faible, et une relation temps-trafic.

16. Système selon l'une quelconque des revendications 1 à 15, le serveur de liaison (2) comprenant en outre :
(a) un moyen de transfert d'une partie des données de liaison montante d'un premier dispositif d'accès (3) au serveur de liaison (2) ;
un moyen de transfert de l'autre partie des données de liaison montante du premier dispositif d'accès (3) via une connexion entre homologues (7, 9) à un deuxième dispositif d'accès (4) et en outre au serveur de liaison (2), et
un moyen d'instauration de premières quantités de liaison montante de la partie des données de liaison montante et de l'autre partie des données de liaison montante ;
et/ou
(b) un moyen de transfert d'une partie des données de liaison descendante du serveur de liaison (2) au premier dispositif d'accès (3) ;
un moyen de transfert de l'autre partie des données de liaison descendante du serveur de liaison (2) au deuxième dispositif d'accès (4) et via la connexion entre homologues (7, 9) au premier dispositif d'accès (3), et
un moyen d'instauration de premières quantités de liaison descendante de la partie des données de liaison descendante et de l'autre partie des données de liaison descendante.

17. Système selon la revendication 16,
dans lequel le serveur de liaison (2) est configuré pour être fourni entre au moins un dispositif d'accès et au moins l'un de l'Internet et du réseau étendu (1),
le serveur de liaison (2) comprenant en outre :
un moyen de sélection d'au moins un dispositif d'accès d'une pluralité de dispositifs d'accès
et/ou
un moyen de transfert d'une partie supplémentaire des données de liaison montante de l'au moins un dispositif d'accès supplémentaire au serveur de liaison (2) et
un moyen d'instauration des quantités de liaison montante de la partie des données de liaison montante, de l'autre partie des données de liaison montante et de la partie supplémentaire des données de liaison montante ou
un moyen de transfert d'une partie supplémentaire des données de liaison descendante du serveur de liaison (2) à l'au moins un dispositif d'accès supplémentaire sélectionné et
un moyen d'instauration des quantités de liaison descendante de la partie des données de liaison descendante, de l'autre partie des données de liaison descendante et de la partie supplémentaire des données de liaison descendante.

18. Système selon l'une quelconque des revendications 1 à 17, comprenant en outre un prolongateur de portée pour des connexions de liaison à l'Internet et/ou à un réseau étendu (1), le prolongateur de portée comprenant un moyen de prolongation d'une connexion entre homologues (7, 9) entre les au moins deux dispositifs d'accès.

19. Système selon la revendication 18, le prolongateur de portée comprenant en outre :
un moyen de transfert de données de liaison montante d'un dispositif d'accès à l'au moins un serveur de liaison (2) et/ou
un moyen de transfert de données de liaison descendante de l'au moins un serveur de liaison (2) au dispositif d'accès.

20. Système selon la revendication 19, dans lequel le moyen de transfert de données de liaison montante d'un dispositif d'accès à l'au moins un serveur de liaison (2) et le moyen de transfert de données de liaison descendante de l'au moins un serveur de liaison (2) au dispositif d'accès sont configurés pour transférer lesdites données sans fil.

21. Système selon les revendications 19 ou 20, le prolongateur de portée comprenant en outre
un moyen d'évaluation d'informations envoyées par un dispositif d'accès, les informations comprenant au moins l'une des propriétés suivantes de l'au moins un des dispositifs d'accès : une existence, un modèle, un micrologiciel, un identifiant unique, une disponibilité générale pour des connexions de liaison, une disponibilité actuelle pour des connexions de liaison, un trafic actuel, un trafic moyen, un trafic global, une capacité disponible pour des connexions de liaison, un temps de trafic fort, un temps de trafic faible, et une relation temps-trafic.

22. Procédé réalisé sur un système de liaison TCP multivoie, MP-TCP, selon l'une quelconque des revendications précédentes, le procédé comprenant les étapes de :
fourniture d'une première connexion (5) entre le premier dispositif d'accès (3) et au moins l'un de l'Internet et du réseau étendu (1),
fourniture d'une deuxième connexion (6) entre le deuxième dispositif d'accès (4) et au moins l'un de l'Internet et du réseau étendu (1),
connexion des premier et deuxième dispositifs d'accès (4) l'un à l'autre via une connexion entre homologues sans fil (7, 9),
fourniture de l'au moins un serveur de liaison (2) entre les au moins premier et deuxième dispositifs d'accès (4) et l'au moins un de l'Internet et du réseau étendu (1),
dans lequel
(a) des données de liaison montante doivent être transférées du premier dispositif d'accès (3) à l'au moins un serveur de liaison (2),
dans lequel l'au moins un serveur de liaison (2) et/ou le premier dispositif d'accès (3) transfère(nt) une partie des données de liaison montante du premier dispositif d'accès (3) à l'au moins un serveur de liaison (2) et transfère(nt) l'autre partie des données de liaison montante du premier dispositif d'accès (3) via la connexion entre homologues (7, 9) au deuxième dispositif d'accès (4) et en outre à l'au moins un serveur de liaison (2), et dans lequel l'au moins un serveur de liaison (2) et/ou le premier dispositif d'accès (3) instaure(nt) en outre des premières quantités de liaison montante de la partie des données de liaison montante et de l'autre partie des données de liaison montante,
et
(b) des données de liaison descendante doivent être transférées de l'au moins un serveur de liaison (2) au premier dispositif d'accès (3),
dans lequel l'au moins un serveur de liaison (2) et/ou le premier dispositif d'accès (3) transfère(nt) une partie des données de liaison descendante de l'au moins un serveur de liaison (2) au premier dispositif d'accès (3) et transfère(nt) l'autre partie des données de liaison descendante de l'au moins un serveur de liaison (2) au deuxième dispositif d'accès (4) et via la connexion entre homologues (7, 9) au premier dispositif d'accès (3), et
dans lequel l'au moins un serveur de liaison (2) et/ou le premier dispositif d'accès (3) instaure(nt) des premières quantités de liaison descendante de la partie des données de liaison descendante et de l'autre partie des données de liaison descendante.
